(19) **Europäisches Patentamt / European Patent Office / Office européen des brevets**

(11) **EP 4 711 420 A1**

(12) **EUROPEAN PATENT APPLICATION**

(43) Date of publication:
18.03.2026 Bulletin 2026/12

(21) Application number: 24200834.0

(22) Date of filing: 17.09.2024

(51) International Patent Classification (IPC):
C08L 97/00 $^{(2006.01)}$      C04B 24/34 $^{(2006.01)}$
C04B 28/00 $^{(2006.01)}$      C04B 26/22 $^{(2006.01)}$
C04B 28/02 $^{(2006.01)}$      C08L 95/00 $^{(2006.01)}$

(52) Cooperative Patent Classification (CPC):
(C-Sets available)
C08L 97/005; C04B 26/22; C04B 28/02;
C04B 2111/00732; C04B 2111/0075          (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Bind-X GmbH
82152 Planegg (DE)

(72) Inventors:
• **Merkl, Jan-Philip**
  **82069 Hohenschäftlarn (DE)**

• **Fried, Luitpold**
  **80687 München (DE)**
• **Wianski, Franz**
  **85253 Erdweg (DE)**
• **Krehenbrink, Martin**
  **82178 Puchheim (DE)**

(74) Representative: **Eisenführ Speiser**
**Patentanwälte Rechtsanwälte PartGmbB**
**Gollierstraße 4**
**80339 München (DE)**

Remarks:
Amended claims in accordance with Rule 137(2)
EPC.

(54) **SOIL STABILIZER**

(57)     The present invention primarily relates to the use of a mixture comprising or consisting of the constituents as defined herein for forming a solidified layer or area on/in a substrate. The invention further relates to a method for forming a solidified layer or area on/in a substrate comprising or consisting of the steps as defined herein. Moreover, the present invention relates to a mixture as defined herein and to a method for preparing a mixture as defined herein.

EP 4 711 420 A1

(52) Cooperative Patent Classification (CPC): (Cont.)

C-Sets
**C04B 26/22, C04B 14/361;**
**C04B 28/02, C04B 24/34**

**Description**

The present invention primarily relates to the use of a mixture comprising or consisting of the constituents as defined herein for forming a solidified layer or area on/in a substrate. The invention further relates to a method for forming a solidified layer or area on/in a substrate comprising or consisting of the steps as defined herein. Moreover, the present invention relates to a mixture as defined herein and to a method for preparing a mixture as defined herein.

Further aspects of the present invention will arise from the description below, in particular from the examples, as well as from the attached patent claims.

Being able to provide mixtures that are able to solidify substrates, such as soil, and that preferably also form a water-resistant layer or area on/in the substrates, is crucial for the use of many construction materials, for infrastructure projects and in particular in the mining industry.

Cement is usually used to provide water-resistant solidification of substrates, but cement-bound materials usually lack flexibility.

Organic colloidal dispersions are used for water-resistant solidification purposes with improved flexibility, but organic colloidal dispersions are usually expensive. Furthermore, colloidal dispersions usually rely on synthetic chemistry and typically exhibit low or no biodegradability.

It was therefore a primary object of the present invention to provide a mixture for forming a solidified layer or area on/in a substrate, preferably for forming a solidified and water-resistant layer or area on/in a substrate, which overcomes the above-mentioned problems. Another object of the present invention was to provide a mixture for said purpose, which - due to its high purity and/or concentration and/or efficiency and/or the nature of its constituents - can be transported to its place of use at minimized transport costs and/or can minimize environmental pollution per treated substrate unit.

According to a first aspect of the present invention, the stated object(s) is/are achieved by the use of a mixture comprising or consisting of the following constituents

(i) one or more water-insoluble lignin(s) and/or one or more oxylignin(s), preferably one or more alkali-soluble lignin(s), more preferably one or more kraft lignin(s),

(ii) one or more solubilizer(s),

(iii) optionally one or more organic additive(s),

(iv) optionally one or more organic surfactant(s),

(v) optionally one or more adjuvant(s),

(vi) optionally water,

for forming a solidified layer or area on/in a substrate, preferably for forming a solidified and water-resistant layer or area on/in a substrate, more preferably for (also) reducing dust formation and/or erosion of the substrate.

Erosion of a substrate includes in particular water erosion.

Whether or not a mixture is able to form a water-resistant layer or area on/in a substrate, can be tested by wet sieve dipping processes such as the slake test and/or DIN 19683-16:2015-12 and/or ISO 10930:2012. Depending on the nature of the substrate and/or the size of the solidified layer or area on/in such substrate, adaptions to these test methods have to be made with respect to sample size and/or sieve size and/or dose rates. To carry out such tests, it is preferred to use dose rates and/or sample sizes and/or soil substrates as defined, preferably as used, herein. In doubt, the modified slake test defined herein is to be used.

The modified slake test is a sieve dipping test and is used to test if a mixture is able to form a water-resistant layer or area on/in a substrate. Preferably, a 95 wt.-% to 5 wt.-% mixture of quartz sand (particle size 0.5-1 mm, e.g. from WOLFF & MÜLLER Quarzsande GmbH) and bentonite (d99 < 63 $\mu$m, e.g. Edasil supplied from BayWa) is used as a soil substrate, which is able to pass the test sieve entirely in the non-hardened state. The mixture whose capacity of forming a water-resistant layer or area on/in a substrate is tested is referred to as the mixture in question. Cylindrical test samples as defined herein (cf. example 1 below) are prepared using a dose rate of the mixture in question of at least 3 g/kg with respect to the mass of the substrate, preferably using the optimum moisture content of the substrate for application of the mixture in question. The samples are allowed to harden at room temperature, preferably at 25°C, and under ambient humidity, preferably of 55 % relative humidity, for at least one day to give the hardened test samples. The (dry) mass of (each of) the hardened test samples is determined and the hardened test sample(s) is/are placed on a test sieve, which is capable of holding the hardened test specimen and allowing the non-hardened substrate to pass entirely. Preferably, the mesh size of the test sieve is higher than the maximum particle size of the substrate, preferably 5 % higher, most preferably the test sieve mesh size is 1 mm. The sieve holding the hardened test sample(s) is placed in a deionized water bath, preferably the water temperature is 20°C, so that the test sample(s) is/are well covered by the water. After an immersion time, preferably of two minutes, the sieve is gently moved in a horizontal direction to allow the loosened part of the substrate to pass the sieve. The person skilled in the art is aware that the energy of the horizontal movement will influence the outcome of the test and will usually minimize the effect of only the movement. The sieve is slowly lifted from the water and the residual test specimens is/are collected and dried. The residual (dry) mass of the hardened test specimen is determined. If the residual (dry) mass is greater than 10 wt.-% of the initial dry mass of this test specimen, the mixture in question is able to form a water-resistant layer or area on/in the substrate. An average of at least two test specimen is recommended to be used to determine if a mixture in question is able to form a water-resistant layer or area on/in a substrate. The higher the residual mass, the better the mixture in question is suitable to form a water-resistant layer or area on/in a substrate.

As used herein, the term "oxylignin" refers to a chemical compound consisting principally of lignin derivatives in an oxidized state, derived from the process known in the art. Said oxylignins are characterized as being acid-insoluble and alkaline-dispersible and/or alkaline-soluble lignin sulfonic acid compounds, preferably free of calcium and manganese compounds, as well as low in non-ligneous organic and inorganic impurities. These products are produced by treatment of wood sulfite liquor under alkaline conditions at high temperature and high pressure.

The term "kraft lignin" refers to lignin products derived from the alkaline pulping process by lowering the pH of the lignin solution ("kraft process"). Kraft lignin is sometimes also called alkali lignin. In U.S. Pa. No. 4293459, it is stated that alkali or kraft lignins are generally prepared by cooking woodchips with a 10% solution of a mixture of sodium hydroxide with about 20 mole percent of sodium sulfide resulting in a modified lignin which is soluble in alkaline solutions.

Layer, in the context of the present text, preferably is a volume of substrate, more preferably a volume of soil. Preferably, the layer may be untreated or may be solidified, meaning already treated with a mixture used according to the invention, but in need of further solidification.

Within the framework of the present text, the water-insoluble lignin(s) of constituent (i) is/are not soluble in water at a pH of 7 or below. Consequently, water-insoluble lignin(s) are also not soluble in acid(s). Preferably, water-insoluble lignin(s) and/or alkali-soluble lignin(s) also include acid-insoluble lignin(s).

Within the framework of the present text, the alkali-soluble lignin(s) of constituent (i) is/are not soluble in water at a pH of 7 or below, but is/are soluble in water or aqueous solutions at a pH of 8 or above. Not soluble means that the solubility of a compound or mixture is lower than 5 g/l.

The term "soluble" describes a compound or mixture, which has a solubility in the respective solvent, preferably in organic solvent(s), in water, in acidic water or in alkaline water, of at least 5 g/l, more preferably at least 10 g/l, more preferably at least 20 g/l, more preferably at least 50 g/l, more preferably at least 100 g/l, more preferably at least 200 g/l, more preferably at least 300 g/l, more preferably at least 400 g/l, determined in each case at 20°C. Most preferably, the term "soluble" describes a compound or mixture which has a solubility in the respective solvent of at least 100 g/l. Higher concentrations are generally preferred to lower concentrations to solve the objectives of the present invention.

Preferably, the solubility in alkaline solutions is determined using an aqueous sodium hydroxide solution at a pH of 11, more preferably with the solubility-determination methods described herein further below.

Preferably, the one or more water-insoluble lignin(s) of constituent (i) is/are selected from the group consisting of organic-soluble lignin(s) and alkali-soluble lignin(s). Alkali-soluble lignin(s) is/are preferably selected from the group consisting of kraft lignin(s), chemically modified lignin(s), chemically modified kraft lignin(s), unsulfonated lignin(s), enzymatically hydrolyzed lignin(s), and soda lignin(s). More preferably, the one or more alkali-soluble lignin(s) is/are selected from the group consisting of soda lignin(s) and kraft lignin(s), most preferably the alkali-soluble lignin is a kraft lignin.

According to a preferred embodiment, the sulfonate ($SO_3^-$) content of the alkali-soluble lignin(s) is below 10 wt.-%, preferably below 9 wt.-%, preferably below 8 wt.-%, preferably below 7 wt.-%, preferably below 6 wt.-%, preferably below 5 wt.-%, preferably below 4 wt.-%, preferably below 3 wt.-%, more preferably below 2 wt.-%, more preferably below 1 wt.-%, more preferably below 0.75 wt.-%, more preferably below 0.5 wt.-%, most preferably below 0.25 wt.-%. Most preferred is that the alkali-soluble lignin(s) does/do not comprise any sulfonate groups.

According to another preferred embodiment, the (elemental) sulfur content of the lignin(s) used within the framework of the present invention, preferably of the alkali-soluble lignin(s), more preferably of the oxylignin(s) and/or kraft lignin(s) used within the framework of the present invention is below 5 wt.-%, preferably below 4 wt.-%, preferably below 3.75 wt.-%, preferably below 3.5 wt.-%, preferably below 3.25 wt.-%, preferably below 3 wt.-%, more preferably below 2.75 wt.-%, more preferably below 2.5 wt.-%, more preferably below 2.25 wt.-%, more preferably below 2 wt.-%, more preferably below 1 wt.-%, more preferably below 0.75 wt.-%, more preferably below 0.5 wt.-%, more preferably below 0.25 wt.-%, based on the total weight of lignin in the mixture. Preferably, the lignin(s) used within the framework of the present invention, preferably the alkali-soluble lignin(s), more preferably the oxylignin(s) and/or kraft lignin(s), does/do not comprise any (elemental) sulfur. Most preferably, the (elemental) sulfur content of the lignin(s) used within the framework of the present invention, preferably of the alkali-soluble lignin(s), more preferably of the oxylignin(s) and/or kraft lignin(s), is below 3.5 wt.-%, based on the total weight of lignin in the mixture.

Organic-soluble lignin(s) is/are soluble in organic solvents and are preferably selected from the group consisting of soda lignin(s) and/or organosolv lignin(s). In case an organic-soluble lignin is used as constituent (i), an organic solvent can be used to solubilize the lignin (cf. constituent (ii) of the mixture).

Enzymatically hydrolyzed lignin(s) comprise(s) lignin(s) extracted from wood by means of enzymatic hydrolysis and is/are described e.g. in WO2017/162923. Enzymatically hydrolyzed lignin(s) is/are usually alkali-soluble and/or alkali-dispersible and (almost) sulfur-free.

According to a preferred embodiment, the alkali-soluble lignin(s) does/do not comprise any lignosulfonate.

Preferably, the alkali-soluble lignin(s) is/are selected from the group consisting of lignin(s) derived from wood, preferably from soft wood and/or hard wood, and from lignin(s) derived from other biomass such as straw, rice, cereal, bamboo, reeds, maize or sugarcane.

Preferably, the lignin(s) derived from wood is/are derived from pine, eucalyptus, oak, poplar, maple, cedar, beech, birch, ash, spruce, fir and/or larch.

Preferably, the chemically modified (kraft) lignin(s) is/are selected from the group consisting of maleic anhydride-modified (kraft) lignin(s), dichloroethane-modified (kraft) lignin(s), dichloromethane-modified (kraft) lignin(s), chlorobenzene-modified (kraft) lignin(s), acetylated (kraft) lignin(s), esterified (kraft) lignin(s), succinic anhydride-modified (kraft) lignin(s), epichlorohydrin-modified (kraft) lignin(s), formaldehyde-modified (kraft) lignin(s), ethylene oxide-modified (kraft) lignin(s), propylene-modified (kraft) lignin(s), L-lactide-modified (kraft) lignin(s), urea-formaldehyde-modified (kraft) lignin(s), aminated (kraft) lignin(s), copolymerized (kraft) lignin(s), and silica-modified (kraft) lignin(s).

Preferably, the average molecular weight ($M_w$) of the oxylignin(s) and/or alkali-soluble lignin(s), preferably kraft lignin(s), used according to the present invention is higher than 3000 g/mol, more preferably higher than 4000 g/mol, more preferably higher than 5000 g/mol, more preferably higher than 6000 g/mol, most preferably higher than 7500 g/mol.

According to another preferred embodiment, the average molecular weight ($M_w$) of the oxylignin(s) and/or alkali-soluble lignin(s), preferably kraft lignin(s), used according to the present invention is below 30000 g/mol, preferably below 25000 g/mol, more preferably below 20000 g/mol, more preferably below 17500 g/mol, more preferably below 15000 g/mol, more preferably below 12500 g/mol, most preferably below 10000 g/mol.

According to another preferred embodiment, the average molecular weight ($M_w$) of the oxylignin(s) and/or alkali-soluble lignin(s), preferably kraft lignin(s), used according to the present invention is below 20000 g/mol and higher than 3000 g/mol, more preferably below 15000 g/mol and higher than 4000 g/mol, more preferably below 10000 g/mol and higher than 4000 g/mol, most preferably below 9000 g/mol and higher than 4500 g/mol.

Preferably, the average molecular weight ($M_w$) of the oxylignin(s) and/or alkali-soluble lignin(s), preferably kraft lignin(s), is higher than 2000 g/mol and below 6000 g/mol, more preferably higher than 2500 g/mol and below 5000 g/mol. This range is most preferred for solid mixtures used according to the invention. Even more preferred is a solid mixture used according to the invention comprising alkali-soluble lignin(s), preferably kraft lignin(s), within the before mentioned average molecular weight ranges, and wherein the weight ratio of the total amount of (elemental) carbon contained in the mixture to the total amount of (elemental) sodium contained in the mixture is from is from 2.9 to 7.

According to a preferred embodiment of the use according to the invention, constituent (ii) comprises or consists of

one or more inorganic solubilizer(s), preferably one or more hydroxide(s) and/or carbonate(s), more preferably sodium hydroxide, potassium hydroxide, lithium hydroxide, calcium hydroxide, magnesium hydroxide, sodium carbonate, sodium bicarbonate, potassium carbonate and/or potassium bicarbonate,
and/or

one or more organic solubilizer(s), preferably urea or derivatives thereof.

Preferably, the one or more solubilizer(s) of constituent (ii) is/are one or more base(s), more preferably inorganic base(s).

According to a preferred embodiment the, one, several or all of the inorganic base(s) of constituent (ii) is/are selected from the group consisting of sodium hydroxide, potassium hydroxide, sodium carbonate, sodium bicarbonate, potassium carbonate, potassium bicarbonate, calcium hydroxide and magnesium hydroxide, more preferably sodium hydroxide and potassium hydroxide.

Any inorganic solubilizer of constituent (ii) (as mentioned herein) is understood to be an inorganic constituent. Any inorganic base of constituent (ii) (as mentioned herein) is understood to be an inorganic constituent.

According to another preferred embodiment, constituent (iii) comprises or consists of one or more (bio-)polymer(s), preferably one or more (bio-)polymer(s) selected from the group consisting of

a) polysaccharides, preferably selected from the group consisting of starch and derivatives thereof, more preferably starch ethers, starch esters, starch carboxylates, cold swelling starches, hot swelling starches, and pregelatinized starch(es), guar ethers and derivatives thereof;

b) polyamino acids, preferably selected from the group consisting of proteins and enzymes, more preferably comprising one or more of the amino acid(s) selected from the group consisting of glycine, alanine, lysine, asparagine, glutamine, glutamate, methionine, and non-proteinogenic amino acids, soy flour, soy meal, pea meal, and pea flour;

c) synthetic polymers, preferably selected from the group consisting of liquid polymer dispersions, dried polymer dispersions, and polymers comprising organic acids, preferably sulfonic acids, carboxylic acids, peroxy carboxylic acids, thiocarboxylic acids and salts thereof, sulfoxides, cyanates, thiocyanates, esters, ethers, thioethers, oxides, thiooxides, amines, imines, hydrazines, hyrazones, amides, sulfates, nitriles, aldehydes, thioaldehydes, ketons, thioketons, oximes, alkohols, thiols, radicals, halogens, silanes, siloxanes, phosphates, phosphonates, alkyl residues, allyl residues, aryl residues and derivatives thereof.

The term "(bio-)polymers" as used herein encompasses polymers and bio-polymers.
Further preferred (bio-)polymers are humic acid(s) and derivatives thereof, pectins and derivatives thereof, chitin and derivatives thereof, chitosan and derivatives thereof, cyclodextrins and derivatives thereof, dextrins and derivatives thereof, natural adhesives, hydrogel-formers, cold-soluble and/or hot-soluble (vegetable) glues, latex, rubber, and derivatives thereof, gum arabic, xanthan, alginates and agar, casein, albumin, yeast extracts, peptones, caseinate, calcium caseinate, milk powder, extracellular polymeric substances (EPS) and derivatives thereof, preferably selected from the group consisting of microbial exopolysaccharides, preferably comprising or consisting of lactose, sucrose, glucose, glucosamine, mannose, glycerol, gluconate, fructose, inulin and/or combinations thereof.
Preferably, the synthetic polymers are selected from the group consisting of polycarboxylate ethers, polyacrylates, preferably polyacrylic acid and/or polyarylic ethers, styrene-acrylates, especially styrene-acrylate dispersions, ethylene-vinyl acetates, especially ethylene-vinyl acetate dispersions, polyvinyl alcohols, polyvinyl acetates, especially polyvinyl acetate dispersions, styrene-butadienes, especially styrene-butadiene dispersions.
Preferably, the (bio-)polymers as used herein are water and/or alkali-soluble. Preferably, the polysaccharides as used herein are water and/or alkali-soluble.
Preferably, the polysaccharides as used herein comprise ten or more monosaccharide units.
Preferably, the polyamino acids as used herein comprise ten or more amino acid units. Preferably, oligoamino acids as used herein comprise two or more to nine or less amino acid units.
Preferably, the polysaccharides used herein are alpha-D-glucose polymers ($\alpha$-D-glucose polymers), such as starch and derivatives of starch. Preferred derivatives of starch are selected from the group consisting of starch ethers, starch esters, starch carboxylates, cold swelling starches, hot swelling starches, and pregelatinized starch(es).
Preferably, the content of beta-D-glucose polymers ($\beta$-D-glucose polymers) in the mixture used according to the invention is below 10 wt.-%, more preferably below 9 wt.-%, more preferably below 8 wt.-%, more preferably below 7 wt.-%, more preferably below 6 wt.-%, more preferably below 5 wt.-%, more preferably below 4 wt.-%, more preferably below 3 wt.-%, more preferably below 2 wt.-%, most preferably below 1 wt.-%, based on the total weight of the mixture. Most preferably, the mixture used according to the invention does not comprise any beta-D-glucose polymers. Preferably, the polysaccharides used according to the invention do not comprise any beta-D-glucose polymers. Beta-D-glucose polymers are preferably selected from the group consisting of cellulose and hemicellulose, and degradation products thereof.
However, functionalized, preferably ethoxylated, beta-D-glucose polymers, in particular cellulose ethers and/or cellulose esters, may be used according to the invention.
Preferred polyamino acids are selected from the group consisting of albumin, soy flour, soy meal, pea meal, pea flour, yeast extracts, casein, and insect meal.
Any organic additive of constituent (iii) (as mentioned herein) is understood to be an organic constituent.
In the context of the present text, the term "derivative" is understood as in the state of the art. In doubt, a derivative can (conveniently) be prepared within a single (chemical) reaction step. Chemical reactions are, for example, but not exclusively, substitution, addition and/or elimination reactions.
According to another preferred embodiment, constituent (iv) comprises or consists of one or more organic surfactant(s) selected from the group consisting of non-ionic surfactants, amphoteric surfactants, anionic surfactants, and cationic surfactants, preferably amphoteric surfactants and cationic surfactants, most preferably comprises or consists of one or more amphoteric surfactant(s).
Preferred cationic surfactants are selected from the group consisting of polyethylene amines, polyethylene imines, polyethylene amine fatty acid reaction products, polyethylene imine fatty acid reaction products and mixtures thereof.
Preferably, the amphoteric surfactants used herein are selected from the group consisting of betaines, sulfobetaines, and gylcines. Further preferred amphoteric surfactants are coconut oil iminopropionate, cocoiminodiglycinate, octyliminodipropionate, sodium oleylampho polycarboxyglycinate, and sodium talgampho polycarboxyglycinate.

Most preferred is sodium talgampho polycarboxyglycinate.

The organic surfactants of constituent (iv) (as mentioned herein) are understood to be organic constituents in the context of the present text.

According to another preferred embodiment, constituent (v) comprises or consists of one or more adjuvant(s) selected from the group consisting of organic adjuvants and inorganic adjuvants,

preferably constituent (v) comprises or consists of one or more organic adjuvant(s) selected from the group consisting of

(v-1) organic salts, preferably selected from the group consisting of calcium formate, calcium acetate, calcium propionate, magnesium formate, magnesium acetate, magnesium propionate, calcium lactate, calcium pyruvate, and calcium salicylate,

(v-2) oligosaccharides, disaccharides and monosaccharides, preferably selected from the group consisting of lactose, glucose, fructose, sucrose, galactose, gluconate and inulin,

(v-3) amino acids, preferably selected from the group consisting of glycine, alanine, lysine, asparagine, glutamine, glutamate, methionine, and non-proteinogenic amino acids,

and/or

preferably constituent (v) comprises or consists of one or more inorganic adjuvant(s) selected from the group consisting of

(v-4) inorganic binders, minerals, and inorganic salts, preferably selected from the group consisting of cement, including its derivatives, preferably CEM I, CEM II, CEM III, CEM IV, CEM V, CEM VI, alumina cement, magnesia cement, phosphate cement, gypsum, slag, ground granulated blast-furnace slag, sodium, potassium and lithium silicates, calcium carbonate, preferably calcite, aragonite and vaterite, aluminium oxide, aluminium hydroxide, calcium sulfate, calcium oxide, magnesium sulfate, microsilica, kaolins, bentonites and (hydrated) lime, calcium chloride, magnesium chloride, calcium nitrate, and iron salts, preferably iron (II) chloride and/or iron (III) chloride.

Further preferred organic adjuvant(s) are selected from the group consisting of

(v-5) residual substances and industrial substances selected from the group consisting of molasses, preferably sugar cane molasses and sugar beet molasses, corn steep liquor, high fructose corn syrup, lactose mother liquors, protein lysates, industrial wastes, preferably from meat production, fruit production, vegetable production, dairy industry and papermaking,

(v-6) organic fibers, preferably selected from the group consisting of cellulose fibers, wood fibers, and wood cellulose fibers,

(v-7) oligoamino acids, preferably comprising glycine, alanine, lysine, asparagine, glutamine, glutamate, methionine, and/or non-proteinogenic amino acids.

Further preferred inorganic adjuvant(s) are selected from the group consisting of
(v-8) inorganic fibers, preferably selected from the group consisting of glass fibers and ceramic fibers.

In the context of the present text, oligosaccharides preferably comprise more than two and less than ten monosaccharide units. Disaccharides comprise two monosaccharide units and monosaccharides comprise one monosaccharide unit.

The organic adjuvants of constituent (v) (as mentioned herein) are understood to be organic constituents in the context of the present text, whereas the inorganic adjuvants of constituent (v) (as mentioned herein) are understood to be inorganic constituents in the context of the present text.

The corresponding monomers of (bio-)polymers as defined herein (cf. constituent (iii)) may also be used, i.e. are also disclosed herein, as organic adjuvants of constituent (v).

According to another preferred embodiment, the weight ratio of the total amount of the organic constituents to the total amount of the inorganic constituents in the mixture used according to the invention is from 0.5 to 30, preferably is from 9 to 20, more preferably is from 10 to 16,
and/or, preferably and,

the weight ratio of the total amount of (elemental) carbon contained in the mixture used according to the invention to the total amount of (elemental) sodium contained in the mixture used according to the invention is from 2.4 to 20, preferably is from 2.9 to 7.

Within the framework of the present text, the water content of the mixture used according to the invention - if present - is not to be considered in the determination of the weight ratio of the total amount of the organic constituents to the total amount of the inorganic constituents of the mixture, i.e. water - if present in the mixture used according to the invention - is neither allocated to the organic constituents nor to the inorganic constituents.

Preferably, the weight ratio of the total amount of the organic constituents to the total amount of the inorganic constituents in the mixture used according to the invention is higher than 2.2, more preferably higher than 2.3, more preferably higher than 2.4, more preferably higher than 2.5, more preferably higher than 2.6, more preferably higher than 2.7, more preferably higher than 2.8, more preferably higher than 2.9, more preferably higher than 3.0, more preferably higher than 3.5, more preferably higher than 4, more preferably higher than 4.5, more preferably higher than 5, more preferably higher than 5.5, more preferably higher than 6, more preferably higher than 6.5, more preferably higher than 7, more preferably higher than 8, more preferably higher than 9, more preferably higher than 10, more preferably higher than 10.5, more preferably higher than 11.

In another embodiment, the weight ratio of the total amount of the organic constituents to the total amount of the inorganic constituents in the mixture used according to the invention is lower than 100, preferably lower than 90, more preferably lower than 80, more preferably lower than 70, more preferably lower than 60, more preferably lower than 50, more preferably lower than 40, more preferably lower than 30, more preferably lower than 20.

According to an alternative embodiment, it is preferred that the weight ratio of the total amount of the organic constituents to the total amount of the inorganic constituents in the mixture used according to the invention is between 9 and 20, preferably between 10 and 18, more preferably between 10 and 16, more preferably between 10 and 15, most preferably between 11 and 14.

The weight ratio of the total amount of the organic constituents to the total amount of the inorganic constituents in the mixture used according to the invention (O/I-ratio) is determined by dividing the sum of the dry mass of the organic constituents of the mixture by the sum of the dry mass of the inorganic constituents of the mixture in accordance with equation 1:

$$\frac{O}{I} ratio = \frac{\sum m_{organic}}{\sum m_{inorganic}} \qquad (1)$$

To determine whether a constituent is of organic or inorganic nature, the definitions within this text should be followed. In case a constituent is not defined herein, an organic constituent is any compound or mixture comprising carbon with the exception of the hydrogen-free chalcogenides (e.g. CO, $CO_2$, $CS_2$) and their derivatives (e.g. $H_2CO_3$), the salt-like and metal carbides as well as metal carbonyls. In case of doubt, the person skilled in the art will consider the IUPAC guidelines to determine whether a compound or mixture is an organic constituent or not. In doubt, the compound or mixture in question is to be allocated to the organic constituents.

Inorganic constituents are, for example, carbon monoxide (CO), carbon dioxide ($CO_2$), carbon disulfide ($CS_2$), carbonic acid ($H_2CO_3$) and its salts NaHCOs, KHCOs, $Na_2CO_3$, $K_2CO_3$, NaKCOs, sodium hydroxide (NaOH), potassium hydroxide (KOH), disodium sulfide ($Na_2S$), dipotassium sulfide ($K_2S$), potassium sodium sulfide (NaKS), calcium hydroxide ($Ca(OH)_2$) and/or magnesium hydroxide ($Mg(OH)_2$). In case a compound or mixture is not specifically classified herein, the person skilled in the art will consider the IUPAC guidelines, in particular the IUPAC "red book" [ISBN 0 85404 438 8] to determine whether a compound or mixture is an inorganic constituent or not. In doubt, the compound or mixture in question is to be allocated to the organic constituents.

Preferably, the weight ratio of the total amount of (elemental) carbon contained in the mixture to the total amount of (elemental) sodium contained in the mixture (C/Na-ratio) used according to the invention is higher than 2.2, more preferably higher than 2.3, more preferably higher than 2.4, more preferably higher than 2.5, more preferably higher than 2.6, more preferably higher than 2.7, more preferably higher than 2.8, more preferably higher than 2.9, more preferably higher than 3.0, more preferably higher than 3.1, more preferably higher than 3.2, most preferably higher than 3.3.

The weight ratio of the total amount of (elemental) carbon contained in the mixture to the total amount of (elemental) sodium contained in the mixture used according to the invention is calculated according to equation 2:

$$\frac{C}{Na} ratio = \frac{\sum m_{Carbon}}{\sum m_{Sodium}} \qquad (2)$$

Preferably, the weight ratio of the total amount of (elemental) carbon contained in the mixture to the total amount of (elemental) sodium contained in the mixture used according to the invention is lower than 30, more preferably lower than 20, more preferably lower than 10, more preferably lower than 9, more preferably lower than 8, more preferably lower than 7, more preferably lower than 6, more preferably lower than 5, most preferably lower than 4.5.

According to a preferred embodiment, the weight ratio of the total amount of (elemental) carbon contained in the mixture to the total amount of (elemental) sodium contained in the mixture used according to the invention is from 2.2 to 30, preferably from 2.4 to 20, more preferably from 2.5 to 15, more preferably from 2.6 to 10, more preferably from 2.7 to 9, more preferably from 2.8 to 8, more preferably from 2.9 to 7, more preferably from 3.0 to 6, more preferably from 3.1 to 5, most preferably from 3.2 to 4.5.

In preferred mixtures used according to the invention, constituent (i) is present in an amount of at least 5 wt.-%, preferably at least 10 wt.-%, preferably at least 15 wt.-%, preferably at least 20 wt.-%, preferably at least 25 wt.-%, preferably at least 30 wt.-%, preferably at least 35 wt.-%, preferably at least 40 wt.-%, preferably at least 45 wt.-%, preferably at least 50 wt.-%, preferably at least 55 wt.-%, preferably at least 60 wt.-%, preferably at least 65 wt.-%, preferably at least 70 wt.-%, preferably at least 80 wt.-%, based on the total weight of the constituents (i) and (ii) and, if present, (iii) and (iv) and (v), of the mixture.

In preferred mixtures used according to the invention, constituent (i) is present in an amount of at most 99 wt.-%, preferably at most 97.5 wt.-%, preferably at most 95 wt.-%, preferably at most 92.5 wt.-%, preferably at most 90 wt.-%, preferably at most 87.5 wt.%, preferably at most 85 wt.-%, based on the total weight of the constituents (i) and (ii) and, if present, (iii) and (iv) and (v), of the mixture.

In particularly preferred mixtures used according to the invention, constituent (i) is present in an amount of 30 to 99 wt.-%, preferably 40 to 97.5 wt.-%, more preferably 50 to 97.5 wt.-%, more preferably 60 to 97.5 wt.-%, based on the total weight of the constituents (i) and (ii) and, if present, (iii) and (iv) and (v), of the mixture.

In particularly preferred mixtures used according to the invention, the total (elemental) sulfur content of the mixture is an amount of from 0.01 to 5 wt.-%, preferably 0.01 to 3 wt.-%, preferably 0.01 to 2.50 wt.-%, preferably 0.01 to 2 wt.-%, more preferably 0.01 to 1.5 wt.-%, more preferably 0.01 to 1.2 wt.-%, more preferably 0.05 to 1.2 wt.-%, more preferably 0.10 to 1.2 wt.-%, more preferably 0.20 to 1.2 wt.-%, more preferably 0.30 to 1.2 wt.-%, more preferably 0.40 to 1.2 wt.-%, more preferably 0.50 to 0.9 wt.-%, based on the total weight of the constituents (i) and (ii) and, if present, (iii) and (iv) and (v), of the mixture.

In preferred mixtures used according to the invention, constituent (ii) is present in an amount of at least 1 wt.-%, preferably at least 2 wt.-%, preferably at least 3 wt.-%, preferably at least 4 wt.-%, preferably at least 5 wt.-%, preferably at least 6 wt.-%, preferably at least 7 wt.-%, preferably at least 8 wt.-%, based on the total weight of the constituents (i) and (ii) and, if present, (iii) and (iv) and (v), of the mixture.

In preferred mixtures used according to the invention, constituent (ii) is present in an amount of at most 50 wt.-%, preferably at most 40 wt.-%, preferably at most 30 wt.-%, preferably at most 20 wt.-%, preferably at most 15 wt.-% , preferably at most 14 wt.%, preferably at most 13 wt.-%, preferably at most 12 wt.-% preferably at most 11 wt.-% preferably at most 10 wt.-%, based on the total weight of the constituents (i) and (ii) and, if present, (iii) and (iv) and (v), of the mixture.

In particularly preferred mixtures used according to the invention, constituent (ii) is present in an amount of 1 to 15 wt.-%, preferably 1 to 12.5 wt.-%, preferably 3 to 12.5 wt.-%, preferably 5 to 12.5 wt.-%, preferably 5 to 10 wt.-%, based on the total weight of the constituents (i) and (ii) and, if present, (iii) and (iv) and (v), of the mixture.

In preferred mixtures used according to the invention, the weight ratio of the total amount of constituent (i) to the total amount of constituent (ii) is 5 to 10, preferably 6 to 9, more preferably 7 to 9.

The weight ratio of the total amount of constituent (i) to the total amount of constituent (ii) in the mixture ($r(i_{by} ii)$) is calculated according to equation 3 by dividing the sum of the weight of all constituents (i) of the mixture by the sum of the weight of all constituents (ii) of the mixture:

$$r_{(i\ by\ ii)} = \frac{\sum m_{constituent(s)(i)}}{\sum m_{constituent(s)(ii)}} \qquad (3)$$

In preferred mixtures used according to the invention, constituent (iii) is present. If present, constituent (iii) preferably is present in an amount of at least 1 wt.-%, preferably at least 2 wt.-%, preferably at least 3 wt.-%, preferably at least 4 wt.-%, preferably at least 5 wt.-%, preferably at least 6 wt.-%, preferably at least 7 wt.-%, preferably at least 8 wt.-%, preferably at least 9 wt.-%, preferably at least 10 wt.-%, preferably at least 11 wt.-%, preferably at least 12 wt.-%, preferably at least 13 wt.-%, preferably at least 14 wt.-%, preferably at least 15 wt.-% preferably at least 16 wt.-%, preferably at least 17wt.-%, preferably at least 18 wt.-%, based on the total weight of the constituents (i) and (ii) and (iii) and, if present, (iv) and (v), of the mixture.

In particularly preferred mixtures used according to the invention, constituent (iii) is present in an amount of from 5 to 50 wt.-%, preferably 8 to 40 wt.-%, preferably 8 to 30 wt.%, preferably 8 to 25 wt.-%, preferably 8 to 22.5 wt.-%, preferably 8 to 20 wt.-%, preferably 8 to 17.5 wt.-%, based on the total weight of the constituents (i) and (ii) and (iii) and, if present, (iv) and (v), of the mixture.

In preferred mixtures used according to the invention, constituent (iii) is present in an amount of at most 80 wt.-%, preferably at most 70 wt.-%, preferably at most 60 wt.-%, preferably at most 50 wt.-%, preferably at most 40 wt.-% ,

preferably at most 35 wt.%, preferably at most 30 wt.-%, preferably at most 27.5 wt.-% preferably at most 25 wt.-% preferably at most 22.5 wt.-%, preferably at most 20 wt.-%, preferably at most 17.5 wt.-%, based on the total weight of the constituents (i) and (ii) and (iii) and, if present, (iv) and (v), of the mixture.

If constituent (iii) is present, it is preferred that the weight ratio of the total amount of constituent (i) to the total amount of constituent (iii) is from 0.5 to 300, preferably from 2 to 300, preferably from 2 to 100, more preferably from 2 to 10, more preferably from 2 to 9, more preferably from 3 to 5.5, more preferably from 3 to 5, most preferably from 3 to 4.

The weight ratio of the total amount of constituent (i) to the total amount of constituent (iii) in the mixture (r(i $_{by\,iii}$)) is calculated according to equation 4 by dividing the sum of the weight of all constituents (i) of the mixture by the sum of the weight of all constituents (iii) of the mixture:

$$r_{(i\ by\ iii)} = \frac{\sum m_{constituent(s)(i)}}{\sum m_{constituent(s)(iii)}} \qquad (4)$$

According to another preferred embodiment, the weight ratio of the total amount of constituent (i) to the total amount of constituent (iii) in the mixture is from 0.5 to 300, preferably from 2 to 10, more preferably from 3 to 5.5.

In preferred mixtures used according to the invention, constituent (iv) is present.

In preferred mixtures used according to the invention, constituent (iv) is present in an amount of at most 10 wt.-%, preferably at most 9 wt.-%, preferably at most 8 wt.-%, preferably at most 7 wt.-%, preferably at most 6 wt.-%, preferably at most 5 wt.%, preferably at most 4 wt.-%, preferably at most 3 wt.-%, preferably at most 2 wt.-%, preferably at most 1 wt.-%, based on the total weight of the constituents (i) and (ii) and (iv) and, if present, (iii) and (v), of the mixture.

In preferred mixtures used according to the invention, constituent (iv) is present in an amount of at least 0.1 wt.-%, preferably at least 0.2 wt.-%, preferably at least 0.3 wt.-%, preferably at least 0.4 wt.-%, preferably at least 0.5 wt.-%, based on the total weight of the constituents (i) and (ii) and (iv) and, if present, (iii) and (v), of the mixture.

According to another preferred embodiment of the mixture used according to the invention, constituent (iv) is present in an amount of at least 0.1 and at most 8 wt.-%, preferably at least 0.1 and at most 5 wt.-%, preferably at least 0.1 and at most 2.5 wt.-%, preferably at least 0.1 and at most 1 wt.-%, based on the total weight of the constituents (i) and (ii) and (iv) and, if present, (iii) and (v), of the mixture.

If constituent (iv) is present, it is preferred that the weight ratio of the total amount of constituent (iv) to the total amount of constituent (i) is from is 0.001 to 0.1, preferably from 0.005 to 0.09, more preferably from 0.01 to 0.09, most preferably from 0.015 to 0.08.

The weight ratio of the total amount of constituent (iv) to the total amount of constituent (i) in the mixture (r($_{iv\,by\,i}$)) is calculated according to equation 5 by dividing the sum of the weight of all constituents (iv) of the mixture by the sum of the weight of all constituents (i) of the mixture:

$$r_{(vi\ by\ i)} = \frac{\sum m_{constituent(s)(iv)}}{\sum m_{constituent(s)(i)}} \qquad (5)$$

In preferred mixtures used according to the invention, constituent (v) is present.

If not stated otherwise, the weight of a constituent refers to the dry weight of said constituent. The weight of water can be determined by means described in the state of the art, preferably by weighing means before and after heating to mass constancy, more preferably by thermogravimetric measurements. Most preferably, the weighing means are combined with chemical detection means such as infrared spectroscopy or mass spectrometry to identify the released constituents (during heating) as water.

According to a preferred embodiment, the mixture used according to the invention further comprises bitumen, preferably emulsified bitumen. Most preferred forms of emulsified bitumen are cationic bitumen emulsion, anionic bitumen emulsion, and amphoteric bitumen emulsion.

Preferably, the amount of bitumen in the mixture used according to the invention is < 99 wt.-%, more preferably < 95 wt.-%, more preferably < 90 wt.-%, more preferably < 80 wt.-%, more preferably < 70 wt.-%, more preferably < 60 wt.-%, more preferably < 50 wt.-%, more preferably < 40 wt.-%, more preferably < 45 wt.-%, more preferably < 40 wt.-%, more preferably < 35 wt.-%, more preferably < 30 wt.-%, more preferably < 25 wt.-%, more preferably < 20 wt.-%, more preferably < 27.5 wt.-%, more preferably < 25 wt.-%, more preferably < 22.5 wt.-%, more preferably < 20 wt.-%, more preferably < 17.5 wt.-%, more preferably < 15 wt.-%, more preferably < 12.5 wt.-%, more preferably < 10 wt.-%, more preferably < 9 wt.-%, more preferably < 8 wt.-%, more preferably < 7 wt.-%, more preferably < 6 wt.-%, more preferably < 5 wt.-%, more preferably < 4 wt.-%, more preferably < 3 wt.-%, more preferably < 2 wt.-%, most preferably < 1 wt.-%, based on the total weight of the constituents (i) and (ii) and, if present, (iii) and (iv) and (v) and the dry weight of bitumen, of/in the mixture.

Preferably, the mixture used according to the invention does not comprise any bitumen.

According to a preferred embodiment, the mixture used according to the invention is a solid and further comprises bitumen. Preferably, the bitumen content of said solid mixture used according to the invention is < 99 wt.-%, more preferably < 95 wt.-%, more preferably < 90 wt.-%, more preferably < 80 wt.-%, more preferably < 70 wt.-%, more preferably < 60 wt.-%, more preferably < 50 wt.-%, more preferably < 40 wt.-%, more preferably < 45 wt.-%, more preferably < 40 wt.-%, more preferably < 35 wt.-%, more preferably < 30 wt.-%, more preferably < 25wt.-%, more preferably < 20 wt.-%, more preferably < 27.5 wt.-%, more preferably < 25 wt.-%, more preferably < 22.5 wt.-%, more preferably < 20 wt.-%, more preferably < 17.5 wt.-%, more preferably < 15 wt.-%, more preferably < 12.5 wt.-%, more preferably < 10 wt.-%, more preferably < 9 wt.-%, more preferably < 8 wt.-%, more preferably < 7 wt.-%, more preferably < 6 wt.-%, more preferably < 5 wt.-%, more preferably < 4 wt.-%, more preferably < 3 wt.-%, more preferably < 2wt.-%, most preferably < 1wt.-%, based on the total weight of the constituents (i) and (ii) and, if present, (iii) and (iv) and (v) and the dry weight of bitumen, of/in the mixture. More preferably, the mixture used according to the invention is a solid and does not comprise any bitumen.

In a preferred mixture used according to the invention, constituent (vi) is present, i.e. a preferred mixture used according to the invention comprises water. Preferably, the amount of water in the mixture used according to the invention is higher than 1 wt.-%, more preferably higherthan 2 wt.-%, more preferably higherthan 5 wt.-%, more preferably higher than 10 wt.-%, more preferably higher than 15 wt.-%, based on the total weight of the constituents (i) and (ii) and (vi) and, if present, (iii) and (iv) and (v), of the mixture.

Preferably, the amount of water (constituent (vi)) in the mixture used according to the invention is < 95 wt.-%, more preferably < 90 wt.-%, more preferably < 80 wt.-%, more preferably < 70 wt.-%, more preferably < 65 wt.-%, more preferably < 60 wt.-%, more preferably < 50 wt.-%, more preferably < 40 wt.-%, more preferably < 45 wt.-%, more preferably < 40 wt.-%, more preferably < 35 wt.-%, more preferably < 30 wt.-%, more preferably < 25 wt.-%, more preferably < 22 wt.-%, more preferably < 20 wt.-%, more preferably < 27.5 wt.-%, more preferably < 25 wt.-%, more preferably < 22.5 wt.-%, more preferably < 20 wt.-%, more preferably < 17.5 wt.-%, more preferably < 15 wt.-%, more preferably < 12.5 wt.-%, more preferably < 10 wt.-%, more preferably < 9 wt.-%, more preferably < 8 wt.-%, more preferably < 7 wt.-%, more preferably < 6 wt.-%, more preferably < 5 wt.-%, more preferably < 4 wt.-%, more preferably < 3 wt.-%, more preferably < 2wt.-%, most preferably < 1 wt.-%, based on the total weight of the constituents (i) and (ii) and (vi) and, if present, (iii) and (iv) and (v), of the mixture.

According to another preferred embodiment, the mixture used according to the invention is solubilized and/or dispersed and/or emulsified in water and preferably the amount of water (constituent (vi)) in the mixture is lower than 70 wt.-%, more preferably lower than 65 wt.-%, based on the total weight of the constituents (i) and (ii) and (vi) and, if present, (iii) and (iv) and (v), of the mixture.

In the mixture used according to the invention, the weight ratio of the total amount of the organic constituents to the total amount of the inorganic constituents preferably is between 10 and 15 and the amount of water in the mixture preferably is lower than 70 wt.-%, more preferably lower than 65 wt.-%, based on the total weight of the constituents (i) and (ii) and, if present, (iii) and (iv) and (v) and (vi), of the mixture.

Advantageously, the lower the amount of water is in the mixture used according to the invention, the lower the amount of transported product is per solidified surface.

According to another preferred embodiment, the mixture (before use, i.e. before being contacted with the substrate) is a solid, preferably is in the form of a powder, or a liquid, preferably is in the form of a solution, or a dispersion or a suspension or a gel or a paste or a granulate, and preferably the mixture (before use, i.e. before being contacted with the substrate) also is water-soluble and/or water-emulsifiable and/or water-dispersible, most preferably water-soluble and/or water-dispersible.

The term "water-soluble" refers to a compound or mixture which has a solubility in water of at least 5 g/l, more preferably at least 10 g/l, more preferably at least 20 g/l, more preferably at least 50 g/l, more preferably at least 100 g/l, more preferably at least 200 g/l, more preferably at least 300 g/l, more preferably at least 400 g/l, determined in each case at 20°C.

The term "water-dispersible" or "water-emulsifiable" describes a compound or mixture which is dispersible or emulsifiable, respectively, in water to an extent of at least 5 g/l, more preferably at least 10 g/l, more preferably at least 20 g/l, more preferably at least 50 g/l, more preferably at least 100 g/l, more preferably at least 200 g/l, more preferably at least 300 g/l, more preferably at least 400 g/l, determined in each case at 20°C.

To determine the water solubility, water dispersibility or water emulsifiability of a compound or mixture, a procedure as follows can be used: For determining the water solubility of solid, pasty or gelatinous compounds or mixtures, a defined amount of the compound or mixture (e.g. 5 g) is placed in a defined amount of water (e.g. 100 mL of distilled water) and stirred at 20°C for 24 hours. This system is then filtered (e.g. using Homyl 80-120 $\mu$m quantitative filter paper). The filter paper is then expertly dried and weighed. The mass ascertained, minus the mass of the filter, is the mass of the residue in grams. The difference between the defined amount of the compound (e.g. 5 g) and the mass of the residue in grams divided by the defined amount of water (e.g. 100 mL) gives the water solubility of the respective compound or mixture in g per litre.

For determining the water dispersibility of solid, pasty or gelatinous compounds or mixtures, a defined amount of the compound or mixture (e.g. 50 g) is placed in a defined amount of water (e.g. 1000 mL of distilled water) and homogenized at 20°C (e.g. using DISPERMAT® LC75 dissolver at 15 000 revolutions per minute for 5 minutes). The mixture is then centrifuged (e.g. at 1500 g for 10 min). The supernatant is decanted off and the precipitate is expertly dried and weighed. The mass ascertained is the mass of the precipitate after centrifuging. The difference between the defined amount of the compound or mixture (e.g. 50 g) and the mass of the precipitate after centrifuging divided by the defined amount of water (e.g. 1000 mL) is the water dispersibility of the compound or mixture.

For determining the water solubility or water emulsfiability of a liquid substance (for example rapeseed oil), the following procedure can be used: A defined amount of the compound (e.g. 5 g) is combined with a defined amount of water (e.g. 100 g of distilled water) and the system is stirred for 24 hours. The mixture is subsequently transferred to a separating funnel. The mixture is left to stand in the separating funnel for 5 minutes. If no phase separation occurs after this time, the mixture is left at rest for a further 2 hours, preferably a further 10 hours. If no phase separation occurs, the compound is deemed to be water soluble. The water solubility of the compound in this example is at least 50 grams per litre. If phase separation does occur, the phases are separated in the separating funnel and the organic phase is dried over sodium sulfate. The weight of the dried organic phase is determined (mass of the organic phase in grams). The difference between the defined amount of the compound (e.g. 5 g) and the mass of the organic phase in grams divided by the defined amount of water (e.g. 100 g) gives the water emulsifiability of the liquid compound.

A further-preferred separation technique for dispersed and undispersed fractions is centrifugation. After appropriate drying, it is possible to determine the mass of the residue in grams and also, from this, the water solubility or water dispersibility.

Using the described solubility determination methods, one could also investigate the solubility of compounds or mixtures in alkaline and/or acidic solutions.

According to a preferred embodiment, the mixture before use, i.e. before being contacted with the substrate, is a solid.

According to another preferred embodiment, the mixture before use, i.e. before being contacted with the substrate, is water-soluble and/or water-emulsifiable and/or water-dispersible.

According to a particularly preferred embodiment, the mixture used according to the invention, before use, i.e. before being contacted with the substrate, is a solid and also is water-soluble and/or water-emulsifiable and/or water-dispersible.

According to another preferred embodiment, the mixture before use, i.e. before being contacted with the substrate, is a solution.

According to another preferred embodiment, the mixture before use, i.e. before being contacted with the substrate, is a suspension.

According to another preferred embodiment, the mixture before use, i.e. before being contacted with the substrate, is a solid and further comprises water (constituent (vi)). Preferably, the amount of water in said solid mixture is < 95 wt.-%, more preferably < 90 wt.-%, more preferably < 80 wt.-%, more preferably < 70 wt.-%, more preferably < 60 wt.-%, more preferably < 50 wt.-%, more preferably < 40 wt.-%, more preferably < 45 wt.-%, more preferably < 40 wt.-%, more preferably < 35 wt.-%, more preferably < 30 wt.-%, more preferably < 25 wt.-%, more preferably < 22 wt.-%, more preferably < 20 wt.-%, more preferably < 27.5 wt.-%, more preferably < 25 wt.-%, more preferably < 22.5 wt.-%, more preferably < 20 wt.-%, more preferably < 17.5 wt.-%, more preferably < 15 wt.-%, more preferably < 12.5 wt.-%, more preferably < 10 wt.-%, more preferably < 9 wt.-%, more preferably < 8 wt.-%, more preferably < 7 wt.-%, more preferably < 6 wt.-%, more preferably < 5 wt.-%, more preferably < 4 wt.-%, more preferably < 3 wt.-%, more preferably < 2wt.-%, most preferably < 1wt.-%, based on the total weight of the constituents (i) and (ii) and (vi) and, if present, (iii) and (iv) and (v), of/in the mixture.

More preferably, the amount of water in a solid mixture used according to the invention is below 20 wt.-%, more preferably below 17.5 wt.-%, most preferably below 15.wt.-%, based on the total weight of the constituents (i) and (ii) and (vi) and, if present, (iii) and (iv) and (v), of the mixture.

Preferably, in the mixtures used according to the invention, the amounts of water and bitumen, if present, are limited according to **Table 1.**

**Table 1:** Preferred embodiments with respect to the amounts of water and bitumen in a mixture used according to the invention, based on the total weight of the constituents (i) and (ii) and, if present, constituents (iii) and (iv) and (v) and the water (constituent (vi)) and bitumen, of/in the mixture.

| Water content | Bitumen content |
|---|---|
| <85 wt.-% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <80 wt.-% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <70 wt.-% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <65 wt.-% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <60 wt-% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <50 wt.-% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |

(continued)

| Water content | Bitumen content |
|---|---|
| <40 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <30 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <20 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <17.5 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <15 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <12.5 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |

(continued)

| Water content | Bitumen content |
|---|---|
| <10 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <9 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <8 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <7 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <6 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <5 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |

(continued)

| Water content | Bitumen content |
|---|---|
| <4 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <3 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <2 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |
| <1 wt.% | < 99 wt.-%, preferably < 95 wt.-%, preferably < 90 wt.-%, preferably < 80 wt.-%, preferably < 70 wt.-%, preferably < 60 wt.-%, preferably < 50 wt.-%, preferably < 40 wt.-%, preferably < 45 wt.-%, preferably < 40 wt.-%, preferably < 35 wt.-%, preferably < 30 wt.-%, preferably < 25 wt.-%, preferably < 20 wt.-%, preferably < 27.5 wt.-%, preferably < 25 wt.-%, preferably < 22.5 wt.-%, preferably < 20 wt.-%, preferably < 17.5 wt.-%, preferably < 15 wt.-%, preferably < 12.5 wt.-%, preferably < 10 wt.-%, preferably < 9 wt.-%, preferably < 8 wt.-%, preferably < 7 wt.-%, preferably < 6 wt.-%, preferably < 5 wt.-%, preferably < 4 wt.-%, preferably < 3 wt.-%, preferably < 2 wt.-%, preferably < 1 wt.-%. Preferably, the mixture used according to the invention does not comprise any bitumen. |

The sign < means "less than" and the sign > means "more than".

Most preferably, the mixtures according to **Table 1** are solids, preferably powders.

Preferably, the amount of ash, preferably chimney ash, in the mixture used according to the invention is below 5 wt.-%, more preferably below 4 wt.-%, more preferably below 3 wt.-%, more preferably below 2 wt.-%, more preferably below 1 wt.-%, based on the total weight of the constituents (i) and (ii) and, if present, constituents (iii) and (iv) and (v), of the mixture.

Preferably, the amount of biocarbon in the mixture used according to the invention is below 5 wt.-%, more preferably below 4 wt.-%, more preferably below 3 wt.-%, more preferably below 2 wt.-%, more preferably below 1 wt.-%, based on the total weight of the constituents (i) and (ii) and, if present, constituents (iii) and (iv) and (v), of the mixture.

Preferably, the mixture used according to the invention does not comprise any chimney ash and/or biocarbon.

Preferably, the mixture used according to the invention does not comprise any chimney ash.

Preferably, the mixture used according to the invention does not comprise any biocarbon.

Preferably, the mixture used according to the invention does not comprise any chimney ash and any biocarbon.

Preferably, the amount of cement in the mixture used in according to the invention is below 5 wt.-%, more preferably below 2 wt.-%, more preferably below 1 wt.-%. More preferably, the mixture used according to the invention does not comprise any cement.

Preferably, the amount of crosslinking agent(s) in the mixture used according to the invention is below 5 wt.-%, more preferably below 4 wt.-%, more preferably below 3 wt.-%, more preferably below 2 wt.-%, more preferably below 1 wt.-%, more preferably below 0.75 wt.-%, more preferably below 0.5 wt.-%, more preferably below 0.25 wt.-%, more preferably below 0.1 wt.-%, based on the total weight of the constituents (i) and (ii) and, if present, constituents (iii) and (iv) and (v), of the mixture.

Preferably, the mixture used according to the invention does not comprise any crosslinking agent(s).

Preferably, the amount of methyl acrylate in the mixture used according to the invention is below 5 wt.-%, more preferably below 4 wt.-%, more preferably below 3 wt.-%, more preferably below 2 wt.-%, more preferably below 1 wt.-%, based on the total weight of the constituents (i) and (ii) and, if present, constituents (iii) and (iv) and (v), of the mixture.

Preferably, the mixture used according to the invention does not comprise any methyl acrylate.

Preferably, the amount of lignosulfonates in the mixture used according to the invention is below 5 wt.-%, more preferably below 4 wt.-%, more preferably below 3 wt.-%, more preferably below 2 wt.-%, more preferably below 1 wt.-%, based on the total weight of the constituents (i) and (ii) and, if present, constituents (iii) and (iv) and (v), of the mixture.

Preferably, the mixture used according to the invention does not comprise any lignosulfonates.

According to another preferred embodiment, the mixture used according to the invention does not comprise any organisms capable of forming carbonate and/or of inducing and/or catalyzing carbonate formation.

According to another preferred embodiment, the mixture used according to the invention does not comprise any enzymes capable of forming carbonate and/or of inducing and/or catalyzing carbonate formation.

According to a most preferred embodiment, the mixture used according to the invention neither comprises any organisms nor any enzymes capable of forming carbonate and/or of inducing and/or catalyzing carbonate formation.

According to another preferred embodiment, the mixture used according to the invention does not comprise any alkali silicates selected from the group consisting of lithium silicate, sodium silicate, potassium silicate, rubidium silicate, and caesium silicate.

Preferably, the mixture used according to the invention is a solution or suspension and has a pH-value of below 14, more preferably below 13, more preferably below 12.5, more preferably below 12, more preferably below 11.75, more preferably below 11.5, more preferably below 11.25, more preferably below 11.0, more preferably below 10.75, more preferably below 10.5, more preferably below 10.25, more preferably below 10, more preferably below 9.75, more preferably below 9.5, more preferably below 9.25, more preferably below 9, more preferably below 8.75, more preferably below 8.5, more preferably below 8.25, most preferably below 8.

Preferably, the mixture used according to the invention is a solution or suspension and has a pH-value of higher than 5, more preferably higher than 6, more preferably higher than 6.5, more preferably higher than 7, more preferably higher than 7.25, more preferably higher than 7.5, more preferably higher than 7.75, more preferably higher than 8.0, more preferably higher than 8.5, more preferably higher than 9, more preferably higher than 9.5, more preferably higher than 10.

Preferably, the solution or suspension to determine the pH-value has a concentration of 20 wt.-%, more preferably 15 wt.%, more preferably 12.5 wt.-%, more preferably 10 wt.-%, more preferably 9 wt.-%, more preferably 8 wt.-%, more preferably 7 wt.-%, more preferably 6 wt.-%, more preferably 5 wt.-%, more preferably 4 wt.-%, more preferably 3 wt.-%, more preferably 2 wt.-%. Most preferably, the concentration is 5 wt.-%.

Preferably, the mixture used according to the invention is a solution or suspension and has a pH-value of between 14 and 9, preferably between 14 and 9.5, preferably between 14 and 9.75, preferably between 13 and 9.75, preferably between 12 and 9.75, preferably between 11.75 and 9.75, preferably between 11.75 and 10, preferably between 11.5 and 10, preferably between 11.25 and 10.

Preferably, the mixture used according to the invention is a solution or suspension and has a pH-value of between 13 and 10, preferably between 12.5 and 10, preferably between 12.25 and 10, preferably between 12 and 10, preferably between 11.9 and 10, preferably between 11.8 and 10, preferably between 11.7 and 10, preferably between 11.6 and 10, preferably between 11.5 and 10, preferably between 11.4 and 10, preferably between 11.3 and 10, preferably between 11.2 and 10.

Preferably, the mixture used according to the invention is a solid and has a bulk density of below 1000 kg/m$^3$, preferably below 900 kg/m$^3$, preferably below 800 kg/m$^3$, preferably below 700 kg/m$^3$, most preferably below 600 kg/m$^3$.

Preferably, the mixture used according to the invention is a solid and has a bulk density of higher than 200 kg/m$^3$, preferably higher than 300 kg/m$^3$, preferably higher than 400 kg/m$^3$, preferably higher than 450 kg/m$^3$, preferably higher than 500 kg/m$^3$, preferably higher than 550 kg/m$^3$, most preferably higher than 575 kg/m$^3$.

Preferably, the mixture used according to the invention is a solid and has a bulk density of higher than 300 kg/m$^3$ and lower than 1000 kg/m$^3$, preferably of higher than 450 kg/m$^3$ and lower than 800 kg/m$^3$, most preferably of higher than 500 kg/m$^3$ and lower than 750 kg/m$^3$.

In a preferred embodiment, the mixture used according to the invention is a solid and comprises particles with sizes of below 1 mm. Most preferably, the d90 value of a solid mixture used according to the invention is below 1 mm, preferably below 0.5 mm, preferably below 0.4 mm, preferably below 0.3 mm, preferably below 0.2 mm, preferably below 0.1 mm, preferably below 0.09 mm. The d90 value indicates the size below which 90% of all particles are found (based on the total amount of particles).

Within the present text, solids are preferably powders and/or granulates. Preferably, the mixture used according to the invention is not homogenous and a mixture of liquid(s), gel(s), paste(s), powder(s) and/or granulate(s). Preferably, the mixture used according to the invention is a powder and/or a granulate.

According to another preferred embodiment, the substrate is selected from the group consisting of organic and inorganic materials, especially of biogenic and/or anthropogenic origin, preferably metamorphic, sedimentary and igneous rocks and in each case their derivatives and mixtures and combinations thereof.

The mixture is used according to the invention for forming a solidified layer or area on/in a substrate, i.e. may preferably act as a binder of/in a (loose) substrate. Preferably, the solidified layer or area formed is water-resistant, which means that, after having formed a solidified layer or area, the layer or area exhibits a measurable wet strength and/or, preferably and, the solidified layer or area does not fall apart after water has contacted the solidified specimen, preferably determined by wet sieve dipping processes defined and referenced herein.

The wet strength can be determined using California Bearing Ratio Tests (e.g. Norm SANS 3001-GR40:2013), where the bearing capacity of a soil in a wet state ("soaked") state is determined. To determine if treatment with a binder leads to (improved) wet strength of a soil, CBR ratios in wet ("soaked") state of treated soil ($CBR_{treated}$) and untreated soil ($CBR_{untreated}$) shall be measured and compared. Comparison can only be done if comparable sample treatment is ensured, at least with respect to (reaction) time, humidity, and compaction. If the $CBR_{treated}$ is higher than the $CBR_{untreated}$, the binder introduces wet strength. The amount of mixture used will influence the improvement and needs to be taken into account. To compare two different mixtures (used according to the invention) with respect to their performance, similar dose rate(s) on similar soil(s) shall be compared.

More preferably, the substrate treated with the mixture used according to the invention is selected from the group consisting of a materials which may be described by one or more of the following subgroups (from Strunz H and Nickel E H, Strunz Mineralogical Tables, 2001, 9th Edition):

(i) elements (including all subgroups), e.g., but not exclusively: gold, copper, silver, zinc, tin, iron, antimony, graphite, palladium, carbon;
(ii) sulfides and sulfo salts (including all subgroups), e.g., but not exclusively: chalcopyrite, galenite, pyrite;
(iii) halides (including all subgroups), e.g., but not exclusively: fluorite;
(iv) oxides and hydroxides (including all subgroups), e.g., but not exclusively: calcium oxide, magnesium oxide, cassiterite, magnetite, haematite, ilmenite;
(v) carbonates and nitrates (including all subgroups), e.g., but not exclusively: calcite;
(vi) borates (including all subgroups), e.g., but not exclusively: borax boracite, ulexite;
(vii) sulfates, chromates, molybdates, tungstates (including all subgroups), e.g., by not exclusively: langbeinite, anhydrite, kieserite, gypsum;
(viii) phosphates, arsenates, vanadates (including all subgroups), e.g., but not exclusively: monazite;
(ix) silicates, germanates (including all subgroups), e.g., but not exclusively: olivine, topaz, muscovite, talc, cement, microsilica, waterglasses;
(x) organic minerals (including all subgroups).

Preferred substrates comprise one or more of the above-stated materials.

In one embodiment, the substrate is selected from the group consisting of soils, earths, ashes, wood, mulch, cements, calcium carbonate (including polymorphs, derivatives and hybrid forms, and also natural-based (GCC, ground calcium carbonate) and synthetic (PCC, precipitated calcium carbonate) forms), iron oxide, aluminium oxide, aluminium hydroxide, magnesium oxide, calcium oxide, and calcium hydroxide, and also fine-grained residues from the processing of one of the above substances or of a mixture thereof, e.g. in the form of tailings. More preferably, the substrate is selected from the group consisting of crystalline and amorphous substances, and also mixtures thereof.

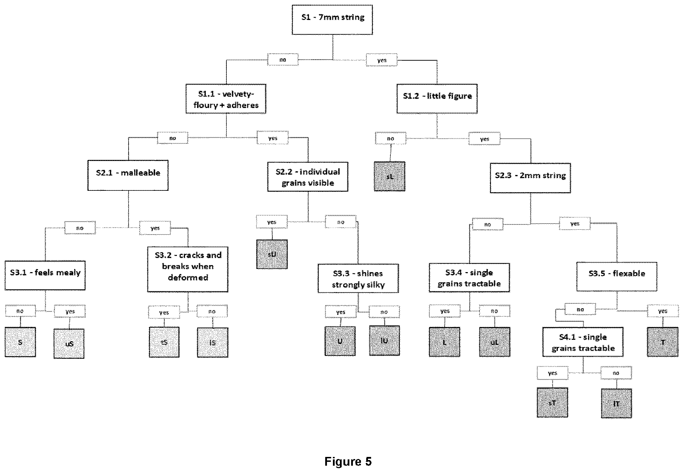

One possibility to classify (granular) substrates is soil type determination. It is important to note that this classification does not allow a direct conclusion of the mineralogy of the soil, however, a certain dependency exists. The soil type determination flow diagram is shown in **Figure 5,** the associated steps are provided in **Table 2** and the outcome is provided in **Table 3.** Steps S1, S2, S3, S4 are carried out in a subsequent manner and the behaviour of the soil is characterized using the applicable questions (cf. **Table 2).** Answering these questions with yes or no leads to the respective Answer ID, e.g. in step S3.1, the answers to the questions S1, S1.1 and S2.1 were no/no/no and the question of S3.1 is "Does the sample feel mealy?". If the answer is yes, then the soil sample is silty sand (uS) and if the answer is no the soil sample is sand (S) (cf. **Table 3** and **Figure 5).**

Table 2: Steps to determine the soil type in a subsequent manner (S1, S2, S3, S4) and the respective Answer ID (cf. **Table 3** and **Figure 5)** to reach the respective question, the associated question and an explanation.

| ID | Answer ID | Step | Question | Explanation |
|---|---|---|---|---|
| **S1** | | **7mm string** | Can the sample be rolled out into a string of 7 mm thick? | Can the sample be rolled out into a string of 7 mm thick? |

| ID | Answer ID | Step | Question | Explanation |
|---|---|---|---|---|
| S1.1 | no | velvety-floury + adheres | Rub a portion of the sample between your thumb and index finger: Does the sample mainly feels like very fine, lightly rubbing particles? For reference, it is helpful to touch flour of quality 450. In addition, the sample adheres strongly in the finger grooves. | For reference, it is helpful to touch flour of quality 450. In addition, the sample adheres strongly in the finger grooves. |
| S1.2 | yes | little figure | Can a small figure of human shape be formed using the sample? Arms and legs of the figure should be relatively thin. | Arms and legs of the figure should be relatively thin. |
| S2.1 | no/no | malleable | Can the sample be rolled out into an approx. 10 mm thick string? | Focus here is very much on the fact whether the substance can be roll out at all (or not). If it is not malleable, it usually breaks directly while attempting to roll it out. |
| S2.2 | no/yes | individual grains visible | Are individual particles visible by the naked eye? | One single stone is not enough, it rather reflects that the soil sample exhibits a high number of single grains. |
| S2.3 | yes/yes | 2mm string | Can the sample be rolled out halfway into an approx. 2 mm thick string? | Use appropiate scale |
| S3.1 | no/no/no | feels mealy | Does the sample feel mealy? | Now it is no longer essential whether it feels mainly mealy - it just has to feel mealy at all [In contrast to step S1.1]. Also, the sample should stick to the finger grooves if it is mealy. |
| S3.2 | no/no/yes | cracks and breaks when deformed | Can the sample be deformed without forming severe cracks? | The sample can't be deformed without forming severe cracks. |
| S3.3 | no/yes/no | shines stringly silky | Are reflections visible on the sample when exposing to sunlight? | Hold the sample against the sunlight or another light source. Are reflections visible on the sample or not? |
| S3.4 and S4.1 | yes/yes/no OR yes/yes/yes/no | single grains tractable | Rub the sample between your thumb and index finger: Can individual particles be clearly felt? | Rub the sample between your thumb and index finger. |
| S3.5 | yes/yes/yes | flexable | Bend the previously formed 2 mm cord towards a closed loop: Does it break directly or does it retain the shape? | Bend the previously formed 2 mm cord towards a closed loop. Does it break directly or does it retain the shape? |

**Table 3:** The answer to the (subsequent) questions in **Table 2,** the soil symbol as well as the resulting soil type.

| Answer | Soil Symbol | Soil Type |
|---|---|---|
| S1, S1.1, S2.1, S3.1:<br>no/no/no/no | S | Sand |
| S1, S1.1, S2.1, S3.1:<br>no/no/no/yes | uS | Silty sand |
| S1, S1.1, S2.1, S3.2:<br>no/no/yes/no | lS | Loamy sand |
| S1, S1.1, S2.1, S3.2:<br>no/no/yes/yes | tS | Clayey sand |
| S1, S1.1,S2.2:<br>no/yes/yes | sU | Sandy silt |
| S1, S1.1, S2.2, S3.3:<br>no/yes/no/yes | U | Silt |
| S1, S1.1, S2.2, S3.3:<br>no/yes/no/no | lU | Loamy silt |
| S1, S1.2:<br>yes/no | sL | Sandy loam |
| S1, S1.2, S2.3, S3.4:<br>yes/yes/no/yes | L | Loam |
| S1, S1.2, S2.3, S3.4:<br>yes/yes/no/no | uL | Silty loam |
| S1, S1.2, S2.3, S3.5, S4.1:<br>yes/yes/yes/no/y es | sT | Sandy clay |
| S1, S1.2, S2.3, S3.5, S4.1:<br>yes/yes/yes/no/n o | lT | Loamy clay |
| S1, S1.2, S2.3, S3.5:<br>yes/yes/yes/yes | T | Clay |

The method associated is to provide a substrate in question and to wet it to a moisture content where it is mouldable, but where the water does not separate (does not "bleed") from the substrate, preferably soil. Most preferably, the optimum moisture content (OMC) of the substrate, preferably soil is used. The OMC is preferably determined by using SANS 3001-GR30:2015.

Preferred is the use of (granular) substrates, wherein the soil type of the substrates is selected from the group consisting of sand, silty sand, loamy sand, clayey sand, sandy silt, silt, loamy silt, sandy loam, loam, silty loam, sandy clay, loamy clay, and clay, preferably sandy clay, loamy sand, sand, loam, silty sand, silty loam, and clay.

Preferred is the use of a (granular) substrate, wherein the quartz content is < 99 wt.-%, preferably < 95 wt.-%, preferably < 90 wt.-%, preferably < 85 wt.-%, preferably < 80 wt.-%, preferably < 75 wt.-%, preferably < 70 wt.-%, preferably < 65 wt.-%, preferably < 60 wt.-%, preferably < 55 wt.-%, preferably < 50 wt.-%, preferably < 45 wt.-%, preferably < 40 wt.-%, preferably < 35 wt.-%, preferably < 30 wt.-%, based on the total weight of the substrate, preferably determined *via* XRD analysis and Rietveld method.

Preferred is the use of a (granular) substrate, wherein the iron content is bigger than 1 wt.-%, preferably bigger than 2 wt.-%, preferably bigger than 3 wt.-%, preferably bigger than 4 wt.-%, preferably bigger than 5 wt.-%, based on the total weight of the substrate, preferably determined *via* XRD analysis and Rietveld method.

Preferably, the substrate is a road, trail, path, dirt road, gravel road, road substructure, road shoulder, agricultural road, street, tailing, mine tailing, mine road, walking way, railroad substrate, damn, dump area, landfill area or waste area, more preferably a top layer of the before mentioned substrates.

Preferred is also the use of a mixture as defined herein as a binder of/in a (loose) substrate, preferably wherein the binder is (also) used for dust and/or erosion control of the substrate.

Preferably, the mixture used according to the invention is combined with other stabilization products, e.g.

inorganic binders such as cement, geopolymers, aluminate cements, epoxies, and/or silicates. Also, the combination of the mixtures used according to the invention with common dust control and/or erosion control products is preferred. Said other stabilization products can be applied before, after or together with the mixtures used according to the invention. Preferred is the application of said other stabilization products after the application of the mixtures used according to the invention. Common dust control and/or erosion control products are lignosulfonates, inorganic salts, in particular calcium and magnesium chloride, synthetic polymers, silicates and its derivatives, surfactants, oils, molasses, bitumen, preferably bitumen emulsions, cutback bitumen, cutback bitumen emulsion, mixtures of parafins and bitumen and blends or mixtures of the before mentioned, in particular mixtures of bitumen emulsions and lignosulfonates.

The mixture used according to the invention preferably has a neutral or negative $CO_2$ footprint, meaning the sum of the green house gas emissions, measured in $CO_2$ equivalents, of all constituents of the mixture is neutral or negative, preferably negative. In doubt, the $CO_2$ footprint shall be calculated *via* DIN EN ISO 14067:2019-02.

It was observed that substrate treated with the mixture used according to the invention was dark in colour. This property of the treated substrate can advantageously be used to identify treated substrate and distinguish it from untreated substrate.

An alternative use of the mixture as defined herein is thus the darkening of a substrate in comparison to untreated substrate.

Preferred is the use of a mixture as defined herein for the solidification of a soil substrate, wherein the swelling of the treated soil substrate is reduced compared to untreated substrate. Preferably, it is reduced by 0.05 mm, preferably by 0.10 mm, preferably by 0.15 mm, preferably by 0.2 mm, preferably by 0.25 mm, preferably by 0.30 mm, preferably by 0.35 mm, preferably by 0.4 mm, preferably by 0.45 mm, preferably by 0.5 mm, preferably by 0.75 mm, preferably by 1 mm, preferably by 1.5 mm, preferably by 2 mm, preferably by 2.5 mm, preferably by 3 mm, preferably by 3.5 mm, preferably by 4 mm, when measuring (and comparing) the swell of the respective swell specimen using applicable California Bearing Ratio (CBR) Norms. In doubt, South African National Standard (SANS 3001-GR40:2013) is used. Most preferably, the swell is reduced during freeze-thaw tests of solidified layers or areas of a substrate, in particular in the frozen state and/or in the remelted state. Consequently, the use of the mixtures as defined herein as swell and/or shrinkage reducers for substrates, preferably for soil, is also encompassed by the present invention.

According to a preferred embodiment, the mixtures used according to the invention act as a free-thaw stabilizers for substrates. Preferably, the solidified layer or area on/in a substrate, bound with the mixtures as defined herein, exhibit increased freeze-thaw resistance.

Also preferred is the use of a mixture as defined herein as a binder for acidic substrates and/or for substrates prone to acidification. Preferably, as a binder for tailings, which are prone to acidification. Preferably, the use of the mixture prevents or reduces acid drainage from tailing material.

Moreover, the mixtures as defined herein can be used for underground solidification, e.g. by injecting said mixtures into the ground.

The solidification of soil substrates particularly includes pelletizing of soil, preferably of iron ore, and/or stabilization of tailings, preferably of Dry-Stack-Tailings. The solidification of soil substrates further particularly includes road construction and road base construction.

The application rate of the mixture used according to the invention to a substrate can be determined in various ways. In one embodiment, the mixture can be applied to a surface, in particular to a plane, hard surface, either by spraying and/or pouring. In this case, the surface application rate (SAR) is the preferred descriptor of the application rate. Non-limiting examples for surface applications are applications to roads, streets, and tailings, preferably to intact roads.

If the mixture used according to the invention is applied to loose material, the calculation of the bulk application rate (BAR) and/or weight based application rate (WBAR) is the preferred descriptor of the application rate. Non-limiting examples for bulk applications are applications of the mixtures as defined herein to ripped roads, ripped streets, and the application to powders, e.g. in granulation and/or agglomeration processes.

Application rates, as cited herein, refer to the sum of the dry mass of all constituents of the mixture used excluding water.

In one embodiment, the surface application rate of the mixtures used according to the invention, preferably per application, is at least 0.1 g, more preferably at least 0.2 g, more preferably at least 0.5 g, more preferably at least 1 g, more preferably at least 2 g, more preferably least 3 g, per one square metre of application area (i.e. surface area of the treated substrate).

In another embodiment, the surface application rate of the mixtures used according to the invention, preferably per application, is below 10 kg, preferably below 7.5 kg, more preferably below 5 kg, more preferably below 2 kg, more preferably below 1 kg, more preferably below 0.9 kg, more preferably below 0.8 kg, more preferably below 0.7 kg, more preferably below 0.6 kg, more preferably below 0.5 kg, more preferably below 0.4 kg, more preferably below 0.3 kg, more preferably below 0.25 kg, more preferably below 0.2 kg, more preferably below 0.175 kg, more preferably below 0.15 kg, more preferably below 0.125 kg, more preferably below 0.1 kg, more preferably below 0.09 kg, more preferably below 0.08 kg, more preferably below 0.07 kg, more preferably below 0.06 kg, more preferably below 0.05 kg, more preferably below 0.04 kg, more preferably below 0.03 kg, more preferably below 0.02 kg, most preferably below 0.01 kg, per one square metre of application area.

Preferred is a surface application rate, preferably per application, of from 0.01 to 1 kg, preferably 0.01 to 0.5 kg, preferably 0.01 to 0.45 kg, most preferably 0.05 to 0.45 kg, per one square metre of application area.

Also preferred is a surface application rate, preferably per application, of from 0.01 to 30 kg, preferably from 0.1 to 0.8 kg, more preferably from 0.05 to 0.45 kg, per one square metre of application area.

When using a spray-on method, the preferred surface application rate, preferably per application, is 0.005 to 0.30 kg, per one square metre of application area. During maintenance, the preferred surface application rate, preferably per application, is 0.005 kg to 0.10 kg, per one square metre of application area.

In another embodiment of the use according to the present invention, the bulk application rate, preferably per application, is below 80 kg, preferably below 70 kg, more preferably below 60 kg, more preferably below 50 kg, more preferably below 40 kg, more preferably below 30 kg, more preferably below 20 kg, more preferably below 15 kg, more preferably below 14 kg, more preferably below 13 kg, more preferably below 12 kg, more preferably below 11 kg, more preferably below 10 kg, more preferably below 9 kg, more preferably below 8 kg, more preferably below 7.5 kg, more preferably below 7 kg, more preferably below 6 kg, most preferably below 5 kg, per one cubic metre of the substrate.

In another embodiment of the use according to the present invention, the bulk application rate, preferably per application, is higher than 150 g, preferably higher than 200 g, more preferably higher than 300 g, more preferably higher than 400 g, more preferably higher than 500 g, more preferably higher than 600 g, more preferably higher than 700 g, more preferably higher than 750 g, more preferably higher than 800 g, most preferably higher than 900 g, per one cubic metre of the substrate.

In another embodiment of the use according to the present invention, the bulk application rate, preferably per application, is higher than 1 kg, preferably higher than 1.1 kg, more preferably higher than 1.2 kg, more preferably higher than 1.25 kg, more preferably higher than 1.3 kg, more preferably higher than 1.4 kg, more preferably higher than 1.5 kg, more preferably higher than 1.6 kg, more preferably higher than 1.7 kg, more preferably higher than 1.75 kg, more preferably higher than 1.8 kg, more preferably higher than 1.9 kg, more preferably higher than 2 kg, more preferably higher than 2.25 kg, more preferably higher than 2.5 kg, more preferably higher than 2.75 kg, more preferably higher than 3 kg, more preferably higher than 3.5 kg, most preferably higher than 4 kg, per one cubic metre of the substrate.

In another embodiment of the use according to the present invention, the bulk application rate, preferably per application, is below 40 and above 1 kg, preferably below 30 and above 1.1 kg, preferably below 20 and above 1.2 kg, preferably below 19 and above 1.3 kg, preferably below 19 and above 1.4 kg, preferably below 18 and above 1.5 kg, preferably below 17 and above 1.6 kg, preferably below 16 and above 1.7 kg, preferably below 15 and above 1.8 kg, per one cubic metre of the substrate.

In another embodiment of the use according to the present invention, the bulk application rate, preferably per application, is higher than 1 g, preferably higher than 2 g, more preferably higher than 3 g, per one cubic metre of the substrate.

In another embodiment of the use according to the present invention, the bulk application rate, preferably per application, is from below 200 kg to above 1 kg, preferably from below 18 kg to above 1.5 kg, more preferably from below 15 kg to above 1.8 kg, per one cubic metre of the substrate.

It is also possible to dose the mixtures as defined herein based on the weight of the substrate treated. This application rate is the weight based application rate (WBAR).

In one embodiment of the use according to the present invention, the weight based application rate, preferably per application, is below 500 g/kg of substrate, preferably below 400 g/kg of substrate, more preferably below 300 g/kg of substrate, more preferably below 250 g/kg of substrate, more preferably below 200 g/kg of substrate, more preferably below 150 g/kg of substrate, more preferably below 100 g/kg of substrate, more preferably below 75 g/kg of substrate, more preferably below 50 g/kg of substrate, more preferably below 40 g/kg of substrate, more preferably below 30 g/kg of substrate, more preferably below 30 g/kg of substrate, more preferably below 20 g/kg of substrate, more preferably below 10 g/kg of substrate, more preferably below 9 g/kg of substrate, more preferably below 8 g/kg of substrate, more preferably below 7 g/kg of substrate, more preferably below 6 g/kg of substrate, more preferably below 5 g/kg of substrate, more preferably below 4 g/kg of substrate, more preferably below 3 g/kg of substrate, most preferably below 2 g/kg of substrate. Preferably, the weight based application rate, preferably per application, is below 5 g/kg, preferably below 4 g/kg of substrate, most preferably below 3 g/kg of substrate.

In another embodiment of the use according to the present invention, the weight based application rate, preferably per application, is higher than 0.1 g/kg of substrate, preferably higher than 0.2 g/kg of substrate, more preferably higher than 0.3 g/kg of substrate, more preferably higher than 0.4 g/kg of substrate, more preferably higher than 0.5 g/kg of substrate, more preferably higher than 0.6 g/kg of substrate, more preferably higher than 0.7 g/kg of substrate, more preferably higher than 0.8 g/kg of substrate, more preferably higher than 0.9 g/kg of substrate, most preferably higher than 1 g/kg of substrate.

Preferably, the weight based application rate, preferably per application, is between 0.5 and 20 g/kg of substrate, preferably between 0.5 and 15 g/kg of substrate, preferably between 0.5 and 10 g/kg of substrate, preferably between 1 and 9 g/kg of substrate, preferably between 1 and 8 g/kg of substrate, preferably between 2 and 7 g/kg of substrate.

In another embodiment of the use according to the present invention, the weight based application rate, preferably per application, is from 0.5 to 500 g, preferably from 1 to 9 g, more preferably from 2 to 7 g, per one kilogram of the substrate.

In another embodiment of the use according to the present invention, the weight based application rate, preferably per application, is from 0.005 to 5 g, preferably from 0.01 to 1 g, preferably from 0.05 to 0.5 g, more preferably from 0.05 to 0.4 g, more preferably from 0.05 to 0.3 g, more preferably for 0.08 to 0.2 g, per one gram of the phyllosilicates contained in the substrate. Preferably, phyllosilicates are selected from the group consisting of serpentinites, clay minerals, preferably kaolinite, talc, illite, chlorite, vermiculite, and mica group minerals, preferably biotite, fuchsite, and muscovite.

The conversion of the surface application rate (SAR, unit $g/m^2$ or $kg/m^2$) to the bulk application rate (BAR, unit $g/m^3$ or $kg/m^3$) depends on the volume of substrate, preferably of soil, wherein the mixture used according to the invention is being distributed in. For build-in, a typical layer thickness is 20 cm, 15 cm, 12.5 cm, 10 cm, 5 cm or 1 cm, preferred are 12.5 cm, 10 cm or 5 cm, most preferred are 12.5 cm. In case of doubt, a layer thickness of 12.5 cm is used when converting surface application rate to bulk application rate. When converting weight based application rate to bulk application rate, the maximum dry density (MDD in accordance with SANS 3001-GR30:2015) of the substrate, preferably the soil, should be used. In doubt, a typical density of 2000 $kg/m^3$ for the substrate, preferably soil, is assumed.

A second aspect of the present invention relates to a method for forming a solidified layer or area on/in a substrate, preferably for forming a solidified and a water-resistant layer or area on/in a substrate, more preferably for (also) reducing dust formation and/or erosion of the substrate, comprising or consisting of the following steps:

(a) Identifying a substrate on/in which a solidified layer or area is to be formed, preferably identifying a substrate on/in which a solidified and water-resistant layer or area is to be formed, more preferably identifying a substrate on/in which dust formation and/or erosion (also) is to be reduced,

(b) providing a mixture, or constituents thereof, as defined herein,

(c) applying the mixture provided in step (b), or the constituents thereof, to/into the substrate, preferably in an amount sufficient to enable the formation of a solidified layer or area on/in the substrate, more preferably in an amount sufficient to enable the formation of a solidified and water-resistant layer or area on/in the substrate, and

(d) forming a solidified layer or area on/in the substrate, preferably forming a solidified and a water-resistant layer or area on/in the substrate, more preferably thereby (also) reducing dust formation and/or erosion on/in the substrate.

According to one preferred embodiment of the method of the invention, applying in step (c) of the method constitutes an application of the mixture provided in step (b), or of constituents thereof, to the substrate to be treated. According to another preferred embodiment, applying constitutes an application and subsequent introduction, for example by mixing in, of the mixture provided in step (b), or of constituents thereof, to/into the substrate to be treated. According to another preferred embodiment of the method of the invention, applying constitutes an introduction of the mixture provided in step (b), or of constituents thereof, into the substrate to be treated.

According to one embodiment of the method of the invention, the substrate or parts thereof identified in step (a) is or are removed from the original location, and mixed with the mixture, or constituents thereof, provided in step (b), in an amount sufficient to enable the formation of a solidified layer or area on/in the substrate (in a mixing apparatus, for example), and the mixture obtained is then returned to the original location of the substrate (or alternatively to a different location at which a solidified layer or area is to be formed), followed by step (d) as described herein. In such an embodiment, step (c) of the method as described herein is omitted.

Depending on the form (e.g. solid or powdery or liquid or gelatinous or pasty) of the mixture, or of the constituents thereof, provided in step (b) of the method of the invention, the application in step (c) may take place in a variety of ways. Powdery mixtures, for example, can be scattered onto the substrate to be treated and/or incorporated into the substrate. Powdery mixtures, as another non-limiting option, can be scattered onto a granular substrate and therefore directly incorporated into the substrate. Usually, wetting takes place after powdery mixtures are incorporated into a substrate.

Liquid mixtures, for example, can be poured or sprayed onto the substrate to be treated and are optionally subsequently incorporated into the substrate. Advantageously, in general, a single application of the mixture provided in step (b), or of the constituents thereof, onto/into the substrate to be treated is sufficient to form a solidified layer or area as defined in step (d) of the method of the invention. With preference, a single application of the mixture provided in step (b), or of the constituents thereof, to/into the substrate to be treated is sufficient to form a solidified layer or area as defined in step (d) of the method of the invention.

The skilled person is aware that a solidification reaction in the method of the invention proceeds with particular efficiency at a defined application volume and/or a defined concentration of the mixture, or constituents thereof, provided in step (b). According to in-house studies, the application volume of a mixture (as defined herein) is preferably at least 0.1 $l/m^2$, more preferably at least 0.5 $l/m^2$, more preferably at least 1.0 $l/m^2$, more preferably at least 2.0 $l/m^2$, at least 3.0 $l/m^2$, at least 4.0 $l/m^2$ or at least 5.0 $l/m^2$, and/or preferably at most 20.0 $l/m^2$, more preferably at most 10.0 $l/m^2$.

Preferred application methods are the build-in and the spray-on application methods or a combination thereof.

In the build-in method, the method according to the invention comprises step (c') instead of step (c). Step (c') preferably comprises:

(c'-i) Ripping or breaking the substrate, preferably to a depth of 12.5 cm, creating a loose substrate,

(c'-ii) applying (a fraction of) the mixture provided in step (b), or constituents thereof, to/into the loose substrate obtained in step (c'-i), in an amount sufficient to enable the formation of a solidified layer or area on/in the substrate, more preferably in an amount sufficient to enable the formation of a solidified and water-resistant layer or area on/in the substrate,

(c'-iii) optionally homogenizing the loose substrate,

(c'-iv) compacting the loose substrate to reform the substrate,

(c'-v) (optionally) applying (the rest of) the mixture provided in step (b), or constituents thereof, to the substrate obtained in step (c'-iv), in an amount sufficient to enable the formation of a solidified layer or area on/in the substrate, more preferably in an amount sufficient to enable the formation of a solidified and water-resistant layer or area on/in the substrate, and

(c'-vi) optionally compacting the substrate.

In the spray-on method, the method according to the invention comprises step (c") instead of step (c). Step (c") preferably comprises:

(c"-i) Spraying the mixture provided in step (b), or constituents thereof, onto the substrate, in an amount sufficient to enable the formation of a solidified layer or area on/in the substrate, more preferably in an amount sufficient to enable the formation of a solidified and water-resistant layer or area on/in the substrate, and

(c"-ii) optionally compacting the substrate.

Maintenance applications can be carried out after carrying out the method according to the invention. A maintenance application preferably is an application, more preferably a spray-on application, of a mixture as defined herein with a low application rate of between 1 to 50 g, preferably 1 to 40 g, per one square metre of application area (i.e. surface area of the treated substrate). Usually, no compaction takes place after a maintenance application. Maintenance intervals depend on environmental conditions around the substrate, e.g. traffic, inflowing dust and alike.

Subsequent compaction of the treated substrate may take place, preferably after step (c), during step (d) or after step (d) of the method according to the invention.

Preferably, the mixture provided in step (b) of the method according to the invention is provided as a solid, preferably as a powder and/or granulate, and subsequently solubilized and/or suspended before being applied to/into the substrate in step (c). According to this embodiment, the transport-associated costs and transport-associated environmental pollution advantageously is reduced.

Preferably, the concentration of the mixture provided in step (b) of the method, if the mixture comprises constituents (i), (ii) and (iii), and, if present, (iv) and/or (v), is 25 to 45 wt.-%, preferably 25 to 35 wt.-%, most preferably 28 to 32 wt.-%, based on the total dry weight of the mixture.

Preferably, the concentration of the mixture provided in step (b) of the method, if the mixture comprises the constituents (i), (ii) and (iii), is 25 to 45 wt.-%, preferably 25 to 35 wt.-%, most preferably 28 to 32 wt.-%, based on the total dry weight of the mixture.

Preferably, the concentration of the mixture provided in step (b) of the method, if the mixture comprises only the constituents (i) and (ii), is 25 to 70 wt.-%, preferably 28 to 65 wt.-%, preferably 28 to 60 wt.-%, most preferably 29 to 50 wt.-%, based on the total dry weight of the mixture.

In one preferred embodiment, step (b) of the method according to the invention comprises an additional dilution step. During this step, the mixture provided can be further diluted, e.g. with water, before it is applied to/into the substrate in step (c) of the method. This is advantageous due to optimized transport.

Preferably, the concentration of the mixture applied in step (c) of the method is 4 to 20 wt.-%, preferably 5 to 18 wt.-%, preferably 6 to 17 wt.-%, preferably 7 to 16 wt.-%, preferably 8 to 15 wt.-%, preferably 9 to 14 wt.-%, most preferably 10 to 13 wt.-%, based on the total dry weight of the mixture.

According to a preferred embodiment of the method according to the invention, the substrate is selected from the group consisting of organic and inorganic materials, especially of biogenic and/or anthropogenic origin, preferably metamorphic, sedimentary and igneous rocks and in each case their derivatives and mixtures and combinations thereof. Further preferred substrates are described above.

According to a preferred embodiment of the method according to the invention, the surface application rate per application of the mixture (in step (c) of the method) is from 0.01 to 30 kg, preferably from 0.1 to 0.8 kg, more preferably from 0.05 to 0.45 kg, per one square metre of application area (i.e. surface area of the treated substrate),
and/or

the bulk application rate (BAR) per application of the mixture (in step (c) of the method) is from below 200 kg to above 1 kg, preferably from below 18 kg to above 1.5 kg, more preferably from below 15 kg to above 1.8 kg, per one cubic metre of the substrate,
and/or

the weight based application rate (WBAR) per application of the mixture (in step (c) of the method) is from 0.5 to 500 g, preferably from 1 to 9 g, more preferably from 2 to 7 g, per one kilogram of the substrate.

A third aspect of the present invention relates to a mixture (as defined herein), preferably for forming a solidified layer or area on/in a substrate, more preferably for forming a solidified and water-resistant layer or area on/in a substrate, more preferably for (also) reducing dust formation and/or erosion of the substrate,

wherein constituent (ii) comprises or consists of sodium hydroxide and/or urea, preferably is an aqueous solution of sodium hydroxide and/or urea,
and/or, preferably and,

wherein the weight ratio of the total amount of the organic constituents to the total amount of the inorganic constituents in the mixture is from 9 to 20, preferably is from 10 to 16,
and/or, preferably and,

wherein the weight ratio of the total amount of (elemental) carbon contained in the mixture to the total amount of (elemental) sodium contained in the mixture is from 2.4 to 20, preferably is from 2.9 to 7.

Preferably the (elemental) sulfur content of the lignin contained in the mixture according to the invention, preferably of the alkali-soluble lignin(s), more preferably of the oxylignin(s) and/or kraft lignin(s), is below 3.5 wt.-%, based on the total weight of the lignin contained in the mixture.

In particularly preferred mixtures according to the present invention, the total (elemental) sulfur content of the mixture is a range of from 0.01 to 5 wt.-%, preferably 0.01 to 3 wt.-%, preferably 0.01 to 2.50 wt.-%, preferably 0.01 to 2 wt.-%, more preferably 0.01 to 1.5 wt.-%, more preferably 0.01 to 1.2 wt.-%, more preferably 0.05 to 1.2 wt.-%, more preferably 0.10 to 1.2 wt.-%, more preferably 0.20 to 1.2 wt.-%, more preferably 0.30 to 1.2 wt.-%, more preferably 0.40 to 1.2 wt.-%, more preferably 0.50 to 0.9 wt.-%, based on the total weight of the constituents (i) and (ii) and, if present, (iii) and (iv) and (v), of the mixture. Most preferably, the total (elemental) sulfur content of the mixture is a range of from 0.01 to 1.50 wt.-%, based on the total weight of the constituents (i) and (ii) and, if present, (iii) and (iv) and (v), of the mixture.

Further preferred embodiments of the mixture according to the third aspect of the present invention correspond to or can be derived from the preferred embodiments of the use according to the first aspect of the invention and/or the preferred embodiments of the method according to the second aspect of the invention, which are detailed herein.

The mixtures according to the present invention advantageously are particularly dose efficient, thus minimizing transport-associated effort, costs and environmental pollution.

According to a preferred embodiment of the mixture according to the invention, constituent (iii) is present and preferably constituent (iii) is starch, more preferably is cold swelling starch,
and/or, preferably and,
the weight ratio of the total amount of constituent (i) to the total amount of constituent (iii) in the mixture is from 0.5 to 300, preferably from 2 to 10, more preferably from 3 to 5.5.

According to another preferred embodiment, the mixture is a solid or a liquid, preferably is in the form of a solution, or a dispersion or a suspension or a gel or a paste, preferably is a solid, more preferably a powder, and preferably the mixture (before being used as defined herein) also is water-soluble and/or water-emulsifiable and/or water-dispersible.

According to a preferred embodiment, the mixture is a solid and also is water-soluble and/or water-emulsifiable and/or water-dispersible.

According to a particularly preferred embodiment, the mixture is a solid and also is water-soluble or water-emulsifiable or water-dispersible.

A fourth aspect of the present invention relates to a method for preparing a mixture, preferably as defined herein or according to the third aspect of the present invention, comprising or consisting of the following steps:

(a) Providing constituent (i) and optionally constituent (iii) and/or constituent (iv) and/or constituent (v) as defined herein, and optionally homogenizing the same,

(b) adding constituent (ii) as defined herein, preferably wherein constituent (ii) comprises or consists of sodium hydroxide and/or urea, more preferably is an aqueous solution of sodium hydroxide and/or urea, to the constituent(s) provided in step (a), preferably by drip-in means and/or spray-in means, more preferably under (constant) mixing,

(c) homogenizing the mixture obtained in step (b) (yielding a homogenized mixture), and

(d) optionally drying the mixture obtained in step (c), preferably by drying means, more preferably as described below.

The method according to the invention can further comprise the following steps:

(e) Optionally packaging of the homogenized mixture obtained in step (c) or (d) into suitable containers (yielding a packed homogenized mixture), and

(f) optionally delivering the packed homogenized mixture obtained in step (e) to customers.

Suitable containers for packaging the mixture as defined herein comprise intermediate bulk containers (IBC), bags, drums, silos, and silo trucks. Preferably, they are of a size to hold 25 kg, 100 kg, 200 kg, 500 kg, 600 kg, 700 kg, 1000 kg, 5000 kg or 10000 kg of the mixture, preferably solid mixture, as defined herein.

Preferably, in step (b) of the method, constituent (ii) is dripped-in and/or sprayed-in, preferably as an aqueous solution or suspension in a concentration of below 1200 g/l, preferably below 1090 g/l, more preferably below 1000 g/l, more preferably below 900 g/l, more preferably below 800 g/l, more preferably below 700 g/l, more preferably below 600 g/l, more preferably below 550 g/l, more preferably below 525 g/l, more preferably below 510 g/l, based on the total volume of the aqueous solution or suspension of constituent (ii).

Most preferably, constituent (ii) is dripped-in and/or sprayed-in in a concentration of from 600 g/l to 400 g/l, most preferably in a concentration of 525 g/l to 475 g/l, based on the total volume of the aqueous solution or suspension of constituent (ii).

Preferably, in step (b) of the method, constituent (ii) is dripped-in and/or sprayed-in, preferably as an aqueous solution or suspension, at a dose rate of 1000 l/h to 100 l/h, preferably 300 l/h to 250 l/h. More preferably, said dose rates are used when constituent (ii) has a concentration of from 600 g/l to 400 g/l, based on the total volume of the aqueous solution or suspension of constituent (ii), and when constituent (ii) is sodium hydroxide. The defined dose rates and concentrations are related to reaction heat and therefore can be important for productivity as well as material quality.

Preferably, in step (b) of the method, the addition speed and concentration of constituent (ii) is adapted to the mass of solid(s) provided in step (a). Preferably, in step (b) of the method, constituent (ii) is dripped-in and/or sprayed-in, preferably as an aqueous solution or suspension, most preferably at a concentration of from 600 g/l to 400 g/l, based on the total volume of the aqueous solution or suspension of constituent (ii), at a dose rate of from 0.25 l/(h kg) to 0.45 l/(h kg), preferably of 0.31 l/(h kg) to 0.36 l/(h kg), wherein the respective mass refers to the total mass of constituent (i) and optionally constituent (iii) and constituent (iv) and constituent (v) as defined herein, if present, which have been provided in step (a). Preferably, the dripping-in and/or spraying-in is done under constant stirring.

Preferred drying means, which may be used in step (d) of the method, are air drying, spray drying, vacuum drying, elevated temperature drying and/or mixtures thereof. Most preferred drying means are air drying, vacuum drying, elevated temperature drying and/or mixtures thereof.

Preferably, at least 1 wt.-% of the total water, preferably of the water added during step (b), is dried during step (d). More preferably, 30 wt.-% of the total water, preferably of the water added during step (b), is dried during step (d). More preferably, 80 wt.-% of the total water, preferably of the water added during step (b), is dried during step (d).

In one embodiment, the evaporation energy of water, if present, is used to cool the reaction vessel.

In one embodiment, the reaction vessel used in any of the steps of the method according to the invention is selected from hammer mills, pin mills, ball mills, roller mills, high speed dispersers, (conical) screw mixers, high-shear mixer, blending devices, high pressure homogenizers, colloid mills, intensive mixers, mixing systems, granulating mixers, ribbon blenders, pelletizing mixers and stirred tanks. Preferred are ribbon blenders, preferably externally cooled ribbon blenders.

For producing a solid mixture, it is beneficial if constituent (i), preferably the alkali-soluble lignin, has a water content of below 25 wt.-%, preferably below 20 wt.-%, preferably below 19 wt.-%, preferably below 18 wt.-%, preferably below 17 wt.-%, preferably below 16 wt.-%, preferably below 15 wt.-%, preferably below 14 wt.-%, preferably below 13 wt.-%, based on the total weight of constituent (i). Preferably, the (elemental) sulfur content of the lignin in the mixture, preferably of constituent (i), preferably of the alkali-soluble lignin(s), most preferably of the oxylignin(s) and/or kraft lignin(s), is below 3.5 wt.-%, based on the total weight of lignin in the mixture.

According to an alternative embodiment of the method as defined herein, constituent (ii) is added to a solution or suspension comprising constituent (i) and subsequently dried, preferably yielding alkalized alkali-soluble lignin. Optionally, the alkalized alkali-soluble lignin is subsequently mixed with constituents (iii) and/or (iv) and/or (v).

What is stated herein for a use according to the invention also applies to the methods according to the invention and *vice versa.* This applies in particular to (preferred) embodiments of the uses according to the invention which correspond to (preferred) embodiments of the methods according to the invention or can be derived from these and *vice versa.*

What is stated herein for a use according to the invention also applies to the mixtures according to the invention and *vice versa.* This applies in particular to (preferred) embodiments of the uses according to the invention which correspond to (preferred) embodiments of the mixtures according to the invention or can be derived from these and *vice versa.*

What is stated herein for the methods according to the invention also applies to the mixtures according to the invention and *vice versa.* This applies in particular to (preferred) embodiments of the methods according to the invention which correspond to (preferred) embodiments of the mixtures according to the invention or can be derived from these and *vice versa.*

Moreover, the (preferred) embodiments described herein can be arbitrarily combined with each other as long as technically sensible.

Description of the figures:

Figure 1: Example of a soil substrate bound with a comparative mixture, which does not provide any water stability (left), and with mixture **M1** (cf. **Table 4**) according to the present invention (right).

Figure 2: Weight retention after erosion testing of different substrates (sandy clay, loamy sand, sand, loam) treated with water, bitumen emulsion and with the mixtures **M15, M16,** and **M17** (cf. **Table 4**) according to the present invention.

Figure 3: Weight retention of water erosion test 2.

Figure 4: Water stability test 2 results as time until samples disintegrate.

Figure 5: Flow chart to determine the soil type of a substrate, preferably of (granular) soil.

The invention will now be described in more detail hereinafter with references to the examples. Unless otherwise stated, all data refer to the weight.

Examples:

**Materials and methods: Used chemicals**

The used bitumen emulsion was a slow setting bitumen emulsion with a solid content of 60 wt.-% commercially available in South Africa (producer Tosas pty). As kraft lignin, a hard wood lignin derived from eucalyptus (abbreviated as "HWE") was used (eco lig 101 from suzano) having a solids content of > 95 wt.-%, a pH of 4 in an aqueous solution (10% w/v), an ash content of < 5 wt.-%, a bulk density of 420 kg/m$^3$, a glass transition temperature of 130°C, a d90 of < 50 $\mu$m, and a molecular weight $M_w$ of 3000 g/mol. A soft wood kraft lignin derived from spruce (SWS) was also used having a lignin content of 95 wt.-%, a sulfur content of below 2.5 wt.-%, and a residual carbohydrate content of < 2.0 wt.-%. The particle size (d90) was < 60 $\mu$m, the bulk density was 450 kg/m$^3$, and the average molecular weight 6250 kg/m$^3$. A soft wood kraft lignin derived from coniferous wood (SWC) was also used having a solid content of 65 wt.-%, an average molecular weight $M_w$ of 5000 g/mol, an ash content of < 2 wt.-%, and a sulfur content of < 2 wt.-% (purchased from UPM under the name BioPiva 100). A hard wood lignin derived from beech (HWB) was also tested having an average molecular weight $M_w$ of 8000 g/mol, a residual carbohydrate content of 8 wt.-%, a water content of below 2 wt.-%, and a sulfur content of approx. 0.07 wt.-%. HWB was not extracted using a kraft process, so the process is perceived to be sulfur-free (in contrast to the kraft process) and comprises steps of chopping wood into small pieces, steam explosion, leaching of hemicelluloses and enzymatic hydrolysis. Sodium lignosulfonate was purchased from Sappi.

Oxylignin was purchased from 3Plink International. Commercial alternatives are available under the tradenames Vanisperse A, an oxylignin produced by Borregaard LignoTech in Sarpsborg, Norway, Maracell XC-2, an oxylignin produced by LignoTech USA, Inc. (a member of the Borregaard Group) in Rothschild, Wis., and Vanillex, an oxylignin produced by DP & Chemical Division of Nippon Paper Industries Co., Ltd., Tokyo Japan.

Ampholak 7TX is a product of Nouryon and was purchased *via* Julius Hoesch GmbH and is a sodium talgampho polycarboxyglycinate. RediSet LQ1200 was purchased from Julius Hoesch GmbH and is a mixture comprising fatty acids, fatty acid reaction products with polyethylenepolyamines and polyethyleneamine. Pregelatinized starch (preg. starch, being a cold swelling starch) was purchased from Körner Stärke (Product name Tigel, based on wheat) or from Ingrain SA (Pty) Ltd (Product name Stygel, based on corn). Sodium hydroxide was purchased from Carl Roth and urea was purchased from Yara.

**Example 1: Performance tests**

Method of specimen preparation: Cylindrical samples: Samples were prepared with a diameter of 0.028 m and a height of 0.0174 m, using five compactions with a 360 g weight, falling from 0.4 m height. This was adjusted to compaction during Marshall tests.

Water exposure test setup: During the water exposure test, up to six specimens are placed into a plastic flow unit (37° angle with respect to the supporting table), where they are held by leaning against an edge. Water is pumped so it contacts each specimen with the same amount of water per time. The water flow rate is typically 1.5 l/min, which models approximately heavy rainfall (e.g. 14000 l/($m^2$ h), with respect to the exposed sample surface). This test setup was adapted to the erosion resistance test apparatus described in South African Pavement Engineering Manual Chapter 3: Materials Testing (2nd edition, 2014, ISBN 978-1-920611-03-3) to suit multiple samples at the same time.

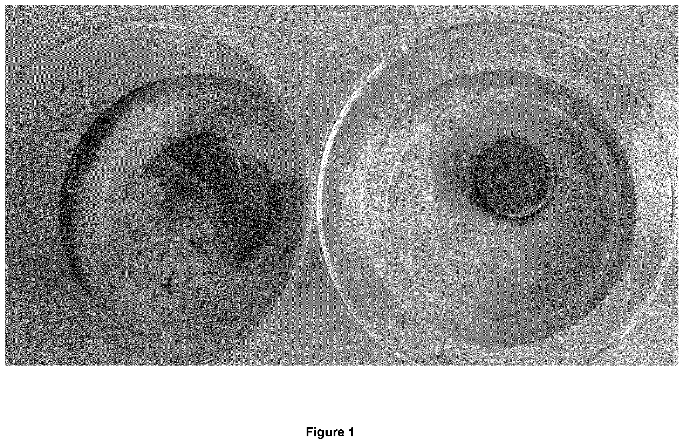

Water stability test setup: Test samples were added to 400 mL of water. The time until (complete) disintegration was recorded. **Figure 1** shows a sample on the left which disintegrated directly upon contact with water (meaning it did not show any water resistance and/or did not show any water stability) and a sample on the right which did not disintegrate (meaning it showed water resistance and/or water stability). The time point of (complete) disintegration (disintegration time) corresponds to very little, preferably below 2 wt.-%, preferably below 1 wt.-%, preferably no, residual mass after wet sieve dipping processes, preferably in the modified slake test defined herein.

Water stability test 1:

In the water stability test, the solidification performance of black liquor (supplier Ryan, solid content 46 wt.-%), **M1**, and **M17** (cf. **Table 4**) used in a bulk application rate of 3 g/kg (with reference to the solid content), respectively, was determined. The time until disintegration was measured in the water exposure test setup (cf. above). Time until disintegration was 30 min with black liquor, 400 min with **M1,** and 480 min with **M17.** Comparable sodium lignosulfonate-treated species disintegrated during the first minute of exposure (after approximately 6 seconds). This indicates that mixtures with a O/I-ratio of higher than 10 (and/or a C/Na ratio of over 3.3) perform better than black liquor-based formulations when it comes to water-resistant solidification. The soil substrate used was a tailing soil of the soil category loam comprising 0.2 wt.-% Muscovite-2M1, 68.0% quartz, 16.8% chlorite and 15.0% gypsum, analyzed by XRD using Rietveld method.

Mixtures **M15, M16,** and **M17** also showed water resistance when using different lignin types, e.g. SWS or SWC or HWB lignin. Oxylignin showed also good water resistance when used as constituent (i) in **M1, M15, M16,** and **M17.**

In this experiment, a separate set of test samples was prepared, which was additionally treated with (a maintenance application of) calcium chloride (100 g/$m^2$). This additional treatment increased the wet stability.

Water erosion test 1:

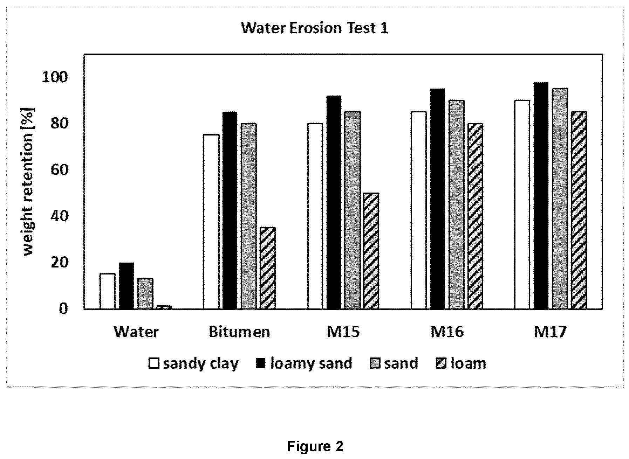

Test samples were prepared as build-in test specimens with the following binders/mixtures: Water - negative control; anionic bitumen emulsion (5.7 kg/$m^3$, based on bitumen and anionic stabilizer), and mixtures **M15** (4 kg/$m^3$), **M16** (4 kg/$m^3$), and **M17** (3.7 kg/$m^3$) (cf. **Table 4**). All samples were used in the water exposure test setup (cf. above). The weight retention after 5 min of water exposure is reported in **Figure 2.** The weight retention was determined by dividing the mass of the dried, water exposed specimen by the dry initial mass of the respective test specimen.

Water erosion test 2:

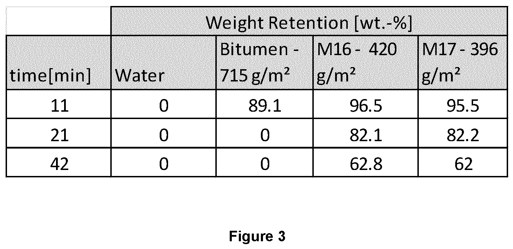

Test samples were prepared as build-in test specimens with bitumen emulsion (715 g/m$^2$ based on bitumen), **M16** (420 g/m$^2$), and **M17** (396 g/m$^2$) (cf. **Figure 3**). All samples were used in the water erosion test setup (cf. above). The weight retention after several time points (11 min, 21 min, 42 min) was determined by dividing the mass of the dried, water exposed specimen by the dry initial mass of the respective test specimen.

The soil material used was a substrate of the soil type loam, comprising 4.4 wt.-% birnesite, 27.2% quartz, 40.8% hematite and 27.5% goetite, analyzed by XRD using Rietveld Method. In this example, it is apparent that soil substrates solidified with mixtures according to the invention exhibit higher water resistance than bitumen-based formulations.

Water stability test 2:

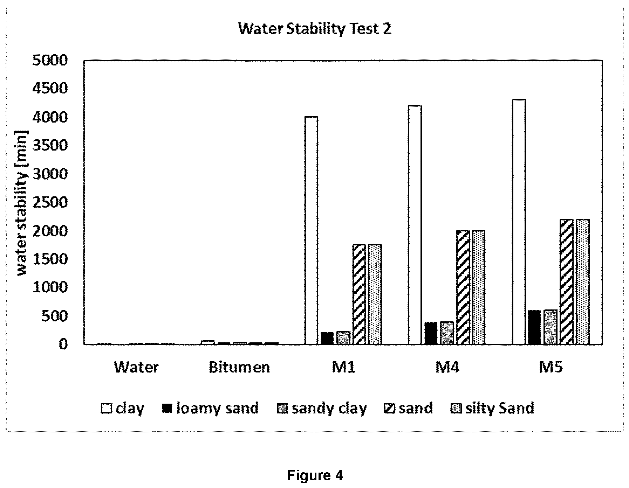

Water stability tests: Test samples were prepared as build-in test specimens with the following binders/mixtures: Water - negative control; bitumen emulsion, and mixtures **M1, M4,** and **M5** (cf. **Table 4**). Bulk application rates were 4 kg/m$^3$, respectively. The time point of disintegration (collapse of the specimen) was determined and is reported in **Figure 4.**

Abrasion test:

Abrasion tests were done in round containers (diameter 2.8 cm; application method spray-on) and a surface application rate of 396 g/m$^2$ of M17 (cf. **Table 4**) was applied in two liters per m$^2$ *via* the spray-on method. An abrasion of a 600 t vehicle was mimicked for 5 minutes, using a miniaturized tire setup showing 5 fold (loamy sand) or 5.75 fold (loam) reduction in abrasion with respect to soil which was treated with water only (and was subsequently redried). This abrasion was comparable to the one on a substrate treated with a bitumen emulsion-based formulation at a surface application rate of 715 g/m$^2$, demonstrating the higher dose efficiency of the mixtures according to the invention. This indicates that the mixtures according to the invention are more dose efficient binders than bitumen emulsion-based formulations.

**Example 2: Preparation method**

The order of addition of the constituents in the method for preparing a mixture according to the invention can be important for the outcome of the method. Kraft lignin from eucalyptus (i), sodium hydroxide (ii), and pregelatinized starch (iii) were used in this experiment.

The order of addition of the constituents of the mixture determined the performance of the mixture, e.g. instant gelling occurred when (ii) (NaOH of a 500 g/l solution) was added to (iii) (pregelatinized starch) alone. This gel was neither well soluble nor emulsifiable in water anymore. When kraft lignin (i) and pregelatinized starch (iii) were mixed and homogenized before the inorganic base (ii) was added, the resulting mixture was of very high quality, e.g. well water-dispersible. The success of the preparation of the mixture was even higher when the addition of constituent (ii) occurred under constant mixing.

The preparation of a solid mixture worked substantially better using HWE compared to using SWC.

Several spray-in tests were carried out and it was identified that preferably the base (constituent (ii)) is sprayed-in in a concentration of 600 g/l to 400 g/l, most preferably at 500 g/l, based on the total volume of the aqueous solution or suspension of constituent (ii).

**Example 3: Bitumen emulsion-based mixtures**

Based on the mixtures **M1, M16,** and **M17** (cf. **Table 4**), asphalt based on emulsified bitumen was produced. The dosage of the mixtures **M1, M16,** and **M17** was 0.25 wt.-%, based on the total asphalt, and the dose of the anionic bitumen emulsion was 6.25 wt.-%, based on the amount of bitumen dosed. The prepared asphalt specimens showed very good solidification properties and water stability.

**Example 4: Further constituents**

Further examples were prepared using the following components as constituent (iii) in an **M1**-based mixture (cf. **Table 4**): Maltodextrin, albumin, casein, functionalized cellulose (ethoxylated cellulose), functionalized starch (ethoxylated starch), lignosulfonate, soy flour, guar gum, gluten, chickpea flour.

As component (v), the following substances were used in an **M1**-based mixture (cf. **Table 4**):
Inorganic adjuvants: Cement, calcium chloride, ammonium chloride, sodium sulfate, calcium formate, aluminium chloride, iron (II) chloride, iron (III) chloride, sodium chloride, magnesium chloride.

Organic adjuvants: Sugar cane molasse, sugar beet molasse, amino acids (alanin, asparagine, glutamine, glutamate, monosodium glutamate, glutamic acid, glycine, methionine.

**Table 4:** Compositions of mixtures **M1** to **M21** based on the solid content of each constituent (m(g)) and the respective weight proportions of the constituents (wt.-%). The sum gives the sum of all constituents of the respective mixtures. If multiple constituents are given, their relative (weight based) proportion is noted in brackets.

| # | Alkali-soluble lignin, constituent (i) | m(g) | wt.-% | Inorganic solubilizer(s), constituent (ii) | m(g) | wt.-% | (Bio-)polymer(s), constituent (iii) | m(g) | wt.-% | Organic surfactant, constituent (iv) | m(g) | wt.-% | Adjuvant, constituent (v), and/or organic solubilizer(s) | m(g) | wt.-% | Sum (g) |
|---|---|---|---|---|---|---|---|---|---|---|---|---|---|---|---|---|
| M1 | HWE | 450 | 90.0 | NaOH | 50 | 10.0 | | | | | | | | | | 500 |
| M2 | HWE | 365 | 72.3 | NaOH | 40 | 7.9 | preg. starch | 100 | 19.8 | | | | | | | 505 |
| M3 | HWE | 315 | 67.5 | NaOH | 35 | 7.5 | preg. starch | 94 | 20.1 | Ampholak 7TX | 23 | 4.9 | | | | 467 |
| M4 | HWE | 407 | 81.9 | NaOH | 40 | 8.0 | preg. starch | 50 | 10.1 | | | | | | | 497 |
| M5 | HWE | 450 | 89.8 | NaOH | 50 | 10.0 | | | | ReadySet LQ1200 | 1 | 0.2 | | | | 501 |
| M6 | HWE | 98.6 | 98.6 | Ca(OH)$_2$ | 1,4 | 1.4 | | | | | | | | | | 100 |
| M7 | HWE | 95.5 | 95.5 | Ca(OH)$_2$ | 4.5 | 4.5 | | | | | | | | | | 100 |
| M8 | HWE | 100 | 83.3 | Na$_2$CO$_3$ | 20 | 16.7 | | | | | | | | | | 120 |
| M9 | HWE | 170 | 98.8 | NaOH | 2 | 1.16 | | | | | | | | | | 172 |
| M10 | HWE | 267 | 69.9 | NaOH | 29.3 | 7.67 | preg. starch | 76 | 19.9 | Ampholak 7TX | 9,6 | 2.5 | | | | 381.9 |
| M11 | HWE | 308 | 72.0 | NaOH | 34 | 7.95 | preg. starch | 85.8 | | | | | | | | 427.8 |
| M12 | HWE | 368 | 50.5 | NaOH | 31 | 4.25 | | | | | | | Urea/CaCl$_2$ (0.4/0.6) | 330 | 45.3 | 729 |
| M13 | HWE | 230 | 68.4 | NaOH | 25.6 | 7.61 | preg. starch | 67.3 | 20,0 | Ampholak 7TX | 13,5 | 4.0 | | | | 336.4 |
| M14 | HWE | 272 | 71.9 | NaOH | 30.3 | 8.01 | preg. starch | 75.8 | 20.0 | | | | | | | 378.1 |
| M15 | HWE | 91 | 91 | NaOH | 9 | 9 | | | | | | | | | | 100 |

| | | | | | | | | | | | | | | | |
|---|---|---|---|---|---|---|---|---|---|---|---|---|---|---|---|
| M16 | HWE | 71.7 | 71.7 | NaOH | 7.97 | 7.97 | preg. starch | 20.35 | 20.3 | | | | | | | 100.02 |
| M17 | HWE | 69.9 | 69.9 | NaOH | 7.8 | 7.8 | preg. starch | 20.4 | 20.4 | Ampholak 7TX | 2 | 2.0 | | | | 100.01 |
| M18 | HWE | 170 | 97.7 | NaOH/Na$_2$CO$_3$ (1/1) | 4 | 2.3 | | | | | | | | | | 174 |
| M19 | HWE | 170 | 85.0 | NaOH/Na$_2$CO$_3$ (3/1) | 10 | 5 | preg. starch | 20 | 10.0 | | | | | | | 200 |
| M20 | HWE | 368 | 82.9 | NaOH | 31 | 6.98 | preg. starch, soy flour (98/2) | 20 | 4,.5 | | | | Urea/CaCl$_2$ (0.4/0.6) | 25 | 5.6 | 444 |
| M21 | HWE | 368 | 82.5 | NaOH | 31 | 6.95 | preg. starch, soy flour (98/2) | 20 | 4.5 | Ampholak 7TX | 2 | 0.4 | Urea/CaCl$_2$ (0.4/0.6) | 25 | 5.6 | 446 |

**EP 4 711 420 A1**

**Claims**

1. Use of a mixture comprising or consisting of the following constituents

   (i) one or more water-insoluble lignin(s) and/or one or more oxylignin(s),
   (ii) one or more solubilizer(s),
   (iii) optionally one or more organic additive(s),
   (iv) optionally one or more organic surfactant(s),
   (v) optionally one or more adjuvant(s),

   for forming a solidified layer or area on/in a substrate.

2. Use according to claim 1, wherein constituent (ii) comprises or consists of

   one or more inorganic solubilizer(s), preferably one or more hydroxide(s) and/or carbonate(s), more preferably sodium hydroxide, potassium hydroxide, lithium hydroxide, calcium hydroxide, magnesium hydroxide, sodium carbonate, sodium bicarbonate, potassium carbonate and/or potassium bicarbonate,
   and/or
   one or more organic solubilizer(s), preferably urea or derivatives thereof.

3. Use according to claim 1 or 2, wherein constituent (iii) comprises or consists of one or more (bio-)polymer(s), preferably one or more (bio-)polymer(s) selected from the group consisting of

   a) polysaccharides, preferably selected from the group consisting of starch and derivatives thereof, more preferably starch ethers, starch esters, starch carboxylates, cold swelling starches, hot swelling starches, and pregelatinized starch, guar ethers and derivatives thereof;
   b) polyamino acids, preferably selected from the group consisting of proteins and enzymes, more preferably comprising one or more of the amino acid(s) selected from the group consisting of glycine, alanine, lysine, asparagine, glutamine, glutamate, methionine, and non-proteinogenic amino acids, soy flour, soy meal, pea meal, and pea flour;
   c) synthetic polymers, preferably selected from the group consisting of liquid polymer dispersions, dried polymer dispersions, and polymers comprising organic acids, preferably sulfonic acids, carboxylic acids, peroxy carboxylic acids, thiocarboxylic acids and salts thereof, sulfoxides, cyanates, thiocyanates, esters, ethers, thioethers, oxides, thiooxides, amines, imines, hydrazines, hyrazones, amides, sulfates, nitriles, aldehydes, thioaldehydes, ketons, thioketons, oximes, alkohols, thiols, radicals, halogens, silanes, siloxanes, phosphates, phosphonates, alkyl residues, allyl residues, aryl residues and derivatives thereof.

4. Use according to any of the preceding claims, wherein constituent (iv) comprises or consists of one or more organic surfactant(s) selected from the group consisting of non-ionic surfactants, amphoteric surfactants, anionic surfactants, and cationic surfactants, preferably amphoteric surfactants and cationic surfactants, most preferably comprises or consists of one or more amphoteric surfactant(s).

5. Use according to any of the preceding claims, wherein constituent (v) comprises or consists of one or more adjuvant(s) selected from the group consisting of organic adjuvants and inorganic adjuvants,

   preferably constituent (v) comprises or consists of one or more organic adjuvant(s) selected from the group consisting of

   (v-1) organic salts, preferably selected from the group consisting of calcium formate, calcium acetate, calcium propionate, magnesium formate, magnesium acetate, magnesium propionate, calcium lactate, calcium pyruvate, and calcium salicylate,
   (v-2) oligosaccharides, disaccharides and monosaccharides, preferably selected from the group consisting of lactose, glucose, fructose, sucrose, galactose, gluconate and inulin,
   (v-3) amino acids, preferably selected from the group consisting of glycine, alanine, lysine, asparagine, glutamine, glutamate, methionine, and non-proteinogenic amino acids,

   and/or
   preferably constituent (v) comprises or consists of one or more inorganic adjuvant(s) selected from the group consisting of

(v-4) inorganic binders, minerals, and inorganic salts, preferably selected from the group consisting of cement, including its derivatives, preferably CEM I, CEM II, CEM III, CEM IV, CEM V, CEM VI, alumina cement, magnesia cement, phosphate cement, gypsum, slag, ground granulated blast-furnace slag, sodium, potassium and lithium silicates, calcium carbonate, preferably calcite, aragonite and vaterite, aluminium oxide, aluminium hydroxide, calcium sulfate, calcium oxide, magnesium sulfate, microsilica, kaolins, bentonites and (hydrated) lime, calcium chloride, magnesium chloride, calcium nitrate, and iron salts, preferably iron (II) chloride and/or iron (III) chloride.

6. Use according to any of the preceding claims, wherein the weight ratio of the total amount of the organic constituents to the total amount of the inorganic constituents in the mixture is from 0.5 to 30, preferably is from 9 to 20, more preferably is from 10 to 16,
and/or
wherein the weight ratio of the total amount of carbon contained in the mixture to the total amount of sodium contained in the mixture is from 2.4 to 20, preferably is from 2.9 to 7.

7. Use according to any of the preceding claims, wherein the weight ratio of the total amount of constituent (i) to the total amount of constituent (iii) in the mixture is from 0.5 to 300, preferably from 2 to 10, more preferably from 3 to 5.5.

8. Use according to any of the preceding claims, wherein the mixture is a solid or a liquid or a dispersion or a suspension or a gel or a paste or a granulate,
and preferably wherein the mixture also is water-soluble or water-emulsifiable or water-dispersible.

9. Use according to any of the preceding claims, wherein the substrate is selected from the group consisting of organic and inorganic materials, especially of biogenic and/or anthropogenic origin, preferably metamorphic, sedimentary and igneous rocks and in each case their derivatives and mixtures and combinations thereof.

10. Method for forming a solidified layer or area on/in a substrate comprising or consisting of the following steps:

(a) Identifying a substrate on/in which a solidified layer or area is to be formed,
(b) providing a mixture, or constituents thereof, as defined in any of the claims 1 to 8,
(c) applying the mixture provided in step (b), or the constituents thereof, to/into the substrate, in an amount sufficient to enable the formation of a solidified layer or area on/in the substrate, and
(d) forming a solidified layer or area on/in the substrate.

11. Method according to claim 10, wherein the surface application rate per application of the mixture is from 0.01 to 30 kg, preferably from 0.1 to 0.8 kg, more preferably from 0.05 to 0.45 kg, per one square metre of application area,
and/or

wherein the bulk application rate per application of the mixture is from below 200 kg to above 1 kg, preferably from below 18 kg to above 1.5 kg, more preferably from below 15 kg to above 1.8 kg, per one cubic metre of the substrate,
and/or
wherein the weight based application rate per application of the mixture is from 0.5 to 500 g, preferably from 1 to 9 g, more preferably from 2 to 7 g, per one kilogram of the substrate.

12. Mixture as defined in any of the claims 1 to 8,

wherein constituent (ii) comprises or consists of sodium hydroxide and/or urea, preferably is an aqueous solution of sodium hydroxide and/or urea, and
wherein the weight ratio of the total amount of the organic constituents to the total amount of the inorganic constituents in the mixture is from 9 to 20, and
wherein the weight ratio of the total amount of carbon contained in the mixture to the total amount of sodium contained in the mixture is from 2.4 to 20.

13. Mixture according to claim 12,

wherein constituent (iii) is present and preferably wherein constituent (iii) is starch, more preferably is cold swelling starch, and

wherein the weight ratio of the total amount of constituent (i) to the total amount of constituent (iii) in the mixture is from 0.5 to 300, preferably from 2 to 10, more preferably from 3 to 5.5.

14. Mixture according to claim 12 or 13, wherein the mixture is a solid or a gel or a paste, preferably is a solid, more preferably a powder, and preferably wherein the mixture also is water-soluble or water-emulsifiable or water-dispersible.

15. Method for preparing a mixture, preferably as defined in any of the claims 1 to 8 or according to any of the claims 12 to 14, more preferably according to claim 14, comprising or consisting of the following steps:

(a) Providing constituent (i) and optionally constituent (iii) and/or constituent (iv) and/or constituent (v) as defined in any of the claims 1 or 3 to 5, and optionally homogenizing the same,
(b) adding constituent (ii) as defined in claim 2 to the constituent(s) provided in step (a), preferably by drip-in means and/or spray-on means, more preferably under mixing,
(c) homogenizing the mixture obtained in step (b), and
(d) optionally drying the mixture obtained in step (c).

**Amended claims in accordance with Rule 137(2) EPC.**

1. Use of a mixture comprising or consisting of the following constituents (i) one or more water-insoluble lignin(s) and/or one or more oxylignin(s),

(ii) one or more solubilizer(s),
(iii) optionally one or more organic additive(s),
(iv) optionally one or more organic surfactant(s),
(v) optionally one or more adjuvant(s),

for forming a solidified layer or area on/in a substrate,
wherein constituent (ii) comprises or consists of one or more inorganic solubilizer(s), preferably one or more hydroxide(s) and/or carbonate(s), and/or one or more organic solubilizer(s) selected from the group consisting of urea and derivatives thereof,
and wherein

the weight ratio of the total amount of the organic constituents to the total amount of the inorganic constituents in the mixture is between 10 and 15, more preferably between 11 and 14,
and/or
constituent (iii) is present and comprises or consists of one or more (bio-)polymer(s) selected from the group consisting of

a) polysaccharides selected from the group consisting of starch and derivatives thereof, preferably starch ethers, starch esters, starch carboxylates, cold swelling starches, hot swelling starches, and pregelatinized starch; guar ethers and derivatives thereof;
b) polyamino acids, preferably selected from the group consisting of proteins and enzymes, more preferably comprising one or more of the amino acid(s) selected from the group consisting of glycine, alanine, lysine, asparagine, glutamine, glutamate, methionine, and non-proteinogenic amino acids, soy flour, soy meal, pea meal, and pea flour;
c) synthetic polymers, preferably selected from the group consisting of liquid polymer dispersions, dried polymer dispersions, and polymers comprising organic acids, preferably sulfonic acids, carboxylic acids, peroxy carboxylic acids, thiocarboxylic acids and salts thereof, sulfoxides, cyanates, thiocyanates, esters, ethers, thioethers, oxides, thiooxides, amines, imines, hydrazines, hyrazones, amides, sulfates, nitriles, aldehydes, thioaldehydes, ketons, thioketons, oximes, alkohols, thiols, radicals, halogens, silanes, siloxanes, phosphates, phosphonates, alkyl residues, allyl residues, aryl residues and derivatives thereof.

2. Use according to claim 1, wherein the amount of bitumen in the mixture is < 70 wt.-%, more preferably < 60 wt.-%, more preferably < 50 wt.-%, more preferably < 45 wt.-%, more preferably < 40 wt.-%, more preferably < 35 wt.-%, more preferably < 10 wt.-%, based on the total weight of the constituents (i) and (ii) and, if present, (iii) and (iv) and (v) and the dry weight of bitumen, of/in the mixture.

3. Use according to claim 1 or 2, wherein the mixture comprises water (constituent (vi)) and the amount of water in the mixture is higher than 15 wt.-% and lower than 95 wt.-%, based on the total weight of the constituents (i) and (ii) and (vi) and, if present, (iii) and (iv) and (v), of the mixture,

4. Use according to any of the preceding claims, wherein constituent (iv) comprises or consists of one or more organic surfactant(s) selected from the group consisting of non-ionic surfactants, amphoteric surfactants, anionic surfactants, and cationic surfactants, preferably amphoteric surfactants and cationic surfactants, most preferably comprises or consists of one or more amphoteric surfactant(s).

5. Use according to any of the preceding claims, wherein constituent (v) comprises or consists of one or more adjuvant(s) selected from the group consisting of organic adjuvants and inorganic adjuvants,

preferably constituent (v) comprises or consists of one or more organic adjuvant(s) selected from the group consisting of

(v-1) organic salts, preferably selected from the group consisting of calcium formate, calcium acetate, calcium propionate, magnesium formate, magnesium acetate, magnesium propionate, calcium lactate, calcium pyruvate, and calcium salicylate,
(v-2) oligosaccharides, disaccharides and monosaccharides, preferably selected from the group consisting of lactose, glucose, fructose, sucrose, galactose, gluconate and inulin,
(v-3) amino acids, preferably selected from the group consisting of glycine, alanine, lysine, asparagine, glutamine, glutamate, methionine, and non-proteinogenic amino acids,

and/or
preferably constituent (v) comprises or consists of one or more inorganic adjuvant(s) selected from the group consisting of
(v-4) inorganic binders, minerals, and inorganic salts, preferably selected from the group consisting of cement, including its derivatives, preferably CEM I, CEM II, CEM III, CEM IV, CEM V, CEM VI, alumina cement, magnesia cement, phosphate cement, gypsum, slag, ground granulated blast-furnace slag, sodium, potassium and lithium silicates, calcium carbonate, preferably calcite, aragonite and vaterite, aluminium oxide, aluminium hydroxide, calcium sulfate, calcium oxide, magnesium sulfate, microsilica, kaolins, bentonites and (hydrated) lime, calcium chloride, magnesium chloride, calcium nitrate, and iron salts, preferably iron (II) chloride and/or iron (III) chloride.

6. Use according to any of the preceding claims, wherein the weight ratio of the total amount of constituent (i) to the total amount of constituent (iii) in the mixture is from 0.5 to 300, preferably from 2 to 100, preferably from 2 to 10, more preferably from 3 to 5.5.

7. Use according to any of the preceding claims, wherein the mixture is a solid or a liquid or a dispersion or a suspension or a gel or a paste or a granulate,
and preferably wherein the mixture also is water-soluble or water-emulsifiable or water-dispersible.

8. Use according to any of the preceding claims, wherein the substrate is selected from the group consisting of organic and inorganic materials, especially of biogenic and/or anthropogenic origin, preferably metamorphic, sedimentary and igneous rocks and in each case their derivatives and mixtures and combinations thereof.

9. Use according to any of the preceding claims, wherein the substrate has a quartz content of < 99 wt.-%, preferably < 95 wt.-%, more preferably < 90 wt.-%, most preferably < 85 wt.-%, based on the total weight of the substrate, preferably determined *via* XRD analysis and Rietveld method.

10. Method for forming a solidified layer or area on/in a substrate comprising or consisting of the following steps:

(a) Identifying a substrate on/in which a solidified layer or area is to be formed,
(b) providing a mixture, or constituents thereof, as defined in any of the claims 1 to 7,
(c) applying the mixture provided in step (b), or the constituents thereof, to/into the substrate, in an amount sufficient to enable the formation of a solidified layer or area on/in the substrate, and
(d) forming a solidified layer or area on/in the substrate.

11. Method according to claim 10, wherein the surface application rate per application of the mixture is from 0.01 to 30 kg, preferably from 0.1 to 0.8 kg, more preferably from 0.05 to 0.45 kg, per one square metre of application area, and/or

wherein the bulk application rate per application of the mixture is from below 200 kg to above 1 kg, preferably from below 18 kg to above 1.5 kg, more preferably from below 15 kg to above 1.8 kg, per one cubic metre of the substrate,
and/or
wherein the weight based application rate per application of the mixture is from 0.5 to 500 g, preferably from 1 to 9 g, more preferably from 2 to 7 g, per one kilogram of the substrate.

12. Mixture as defined in any of the claims 1 to 7,

wherein constituent (ii) comprises or consists of sodium hydroxide and/or urea, preferably is an aqueous solution of sodium hydroxide and/or urea, and
wherein the weight ratio of the total amount of the organic constituents to the total amount of the inorganic constituents in the mixture is between 10 and 15, more preferably between 11 and 14,
and/or
constituent (iii) is present and is starch, preferably is cold swelling starch.

13. Mixture according to claim 12,

wherein constituent (iii) is present, and
wherein the weight ratio of the total amount of constituent (i) to the total amount of constituent (iii) in the mixture is from 0.5 to 300, preferably from 2 to 100, preferably from 2 to 10, more preferably from 3 to 5.5.

14. Mixture according to claim 12 or 13, wherein the mixture is a solid or a gel or a paste, preferably is a solid, more preferably a powder, and preferably wherein the mixture also is water-soluble or water-emulsifiable or water-dispersible.

15. Method for preparing a mixture as defined in any of the claims 1 to 7 or according to any of the claims 12 to 14, preferably according to claim 14, comprising or consisting of the following steps:

(a) Providing constituent (i) and optionally constituent (iii) and/or constituent (iv) and/or constituent (v) as defined in any of the claims 1 or 4 or 5, and optionally homogenizing the same,
(b) adding constituent (ii) as defined in claim 1 to the constituent(s) provided in step (a), preferably by drip-in means and/or spray-on means, more preferably under mixing,
(c) homogenizing the mixture obtained in step (b), and
(d) optionally drying the mixture obtained in step (c).

Figure 1

Figure 2

| time[min] | Water | Weight Retention [wt.-%] | | |
|---|---|---|---|---|
| | | Bitumen - 715 g/m² | M16 - 420 g/m² | M17 - 396 g/m² |
| 11 | 0 | 89.1 | 96.5 | 95.5 |
| 21 | 0 | 0 | 82.1 | 82.2 |
| 42 | 0 | 0 | 62.8 | 62 |

Figure 3

Figure 4

Figure 5

# EUROPEAN SEARCH REPORT

**Application Number**

EP 24 20 0834

## DOCUMENTS CONSIDERED TO BE RELEVANT

| Category | Citation of document with indication, where appropriate, of relevant passages | Relevant to claim |
|---|---|---|
| X | DE LIMA NETO ET AL: "The effects of Kraft lignin on physical, rheological and anti-ageing properties of asphalt binders", INTERNATIONAL JOURNAL OF ADHESION AND ADHESIVES, vol. 125, 1 July 2023 (2023-07-01), page 103414, XP093248108, AMSTERDAM, NL ISSN: 0143-7496, DOI: 10.1016/j.ijadhadh.2023.103414 * abstract; paragraphs 2.1 and 2.2 * ----- | 1-11,15 |
| X | MELRO ELODIE ET AL: "Dissolution of kraft lignin in alkaline solutions", INTERNATIONAL JOURNAL OF BIOLOGICAL MACROMOLECULES, ELSEVIER BV, NL, vol. 148, 16 January 2020 (2020-01-16), pages 688-695, XP086077252, ISSN: 0141-8130, DOI: 10.1016/J.IJBIOMAC.2020.01.153 [retrieved on 2020-01-16] * abstract; figure 3b * ----- | 12-14 |

**CLASSIFICATION OF THE APPLICATION (IPC)**

INV.
C08L97/00
C04B24/34
C04B28/00
C04B26/22
C04B28/02
C08L95/00

**TECHNICAL FIELDS SEARCHED (IPC)**

C08L
C04B
C09D
C09J

The present search report has been drawn up for all claims

| Place of search | Date of completion of the search | Examiner |
|---|---|---|
| Munich | 24 March 2025 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

The Search Division considers that the present European patent application does not comply with the requirements of unity of invention and relates to several inventions or groups of inventions, namely:

```
    1. claims: 1-11, 15

        Use according to claims 1-9; method according to claims
        10-11; method according to claim 15.
                            ---

    2. claims: 12-14

        Mixture as defined in claims 12-14.
                            ---
```

**REFERENCES CITED IN THE DESCRIPTION**

**Patent documents cited in the description**

- WO 2017162923 A

**Non-patent literature cited in the description**

- IUPAC ''red book